# EUROPÄISCHE PATENTSCHRIFT

(11) **EP 4 004 310 B1**
(45) Veröffentlichungstag und Bekanntmachung des Hinweises auf die Patenterteilung: **23.04.2025**
(21) Anmeldenummer: 20745178.2
(22) Anmeldetag: 22.07.2020
(51) Int. Cl.: E04H 12/08, B21C 37/18, F03D 13/20

(54) **VERFAHREN ZUM ERZEUGEN EINES TURMSEGMENTS UND TURMSEGMENT**
METHOD FOR PRODUCING A TOWER SEGMENT AND TOWER SEGMENT
PROCÉDÉ DE PRODUCTION D'UN SEGMENT DE TOUR ET SEGMENT DE TOUR

(30) Priorität: 25.07.2019 DE 102019120175
(43) Veröffentlichungstag der Anmeldung: 01.06.2022
(73) Patentinhaber: Wobben Properties GmbH, 26607 Aurich (DE)
(72) Erfinder: BRENNER, Albrecht, 26607 Aurich (DE); BOETTCHER, Bernd, 26607 Aurich (DE); HOFFMANN, Alexander, 26721 Emden (DE); HARMS, Harro, 26639 Wiesmoor (DE)
(74) Vertreter: Eisenführ Speiser
(86) Internationale Anmeldenummer: PCT/EP2020/070696
(87) Internationale Veröffentlichungsnummer: WO 2021/013894

(56) Entgegenhaltungen:
- EP-A1- 2 615 226
- JP-A- 2005 264 535
- US-A1- 2012 117 898

## Beschreibung

Die Erfindung betrifft ein Fertigungsverfahren zum Erzeugen eines Turmsegments, eines Turmabschnitts und einer Turmsektion für einen Turm, insbesondere für einen Turm einer Windenergieanlage. Ferner betrifft die Erfindung ein Turmsegment, einen Turmabschnitt und eine Turmsektion für einen Turm, insbesondere für einen Turm einer Windenergieanlage, einen Turm und eine Windenergieanlage.

Ein Turm, beispielsweise ein Turm einer Windenergieanlage, wird üblicherweise über mehrere Jahrzehnte betrieben. Er ist in aller Regel nicht austauschbar und insofern für eine vergleichsweise lange Lebensdauer auszulegen. Ein solcher Turm, insbesondere für Windenergieanlagen, trägt allerdings zu einem erheblichen Teil zu den Gesamtkosten der Herstellung einer Windenergieanlage bei.

EP 2 615 226 B1 betrifft eine als Turm einer Windenergieanlage einzusetzende Stahlrohrstützenkonstruktion und ein Verfahren zur Herstellung der Stahlrohrstützenkonstruktion, umfassend kreisförmige Stahlrohre, die jeweils erhalten werden durch Formen mindestens einer Stahlplatte mit einem oder mehreren Abschnitten, in dem die Plattendicke in der Walzrichtung variiert, zu einer Ringform.

Mittels existierender Lösungen lassen sich zwar Türme herstellen, diese Türme sind aber mit Blick auf eine lange Lebensdauer und geringe Kosten verbesserungswürdig. Die Entwicklung zu größer werdenden Rotordurchmessern und Nennleistungen von Windenergieanlagen verstärkt diesen Bedarf. Denn die Entwicklung führt zu größeren Türmen, die höheren Belastungen ausgesetzt sind, was zusätzlichen Ressourceneinsatz - etwa Zeit, Material, Personal - also höhere Kosten erfordert, um trotz der zunehmenden Belastung eine geforderte Lebensdauer zu erreichen.

Das Deutsche Patent- und Markenamt hat in der Prioritätsanmeldung zur vorliegenden Anmeldung folgenden Stand der Technik recherchiert: US 8 752 337 B2, EP 2 615 226 B1, JP 2005 - 264 535 A, Hau, Erich: Windkraftanlagen, 6. Aufl., Berlin: Springer Vieweg, Broschüre "Perfektion, die keinen kalt lässt: Elektrowerkzeug-Lösungen vor und nach dem Schweißen." der Firma metabo, 72622 Nürtingen, Druckvermerk 09/17.

Es ist daher eine Aufgabe der vorliegenden Erfindung, ein Fertigungsverfahren zum Erzeugen eines Turmsegments, eines Turmabschnitts und einer Turmsektion für einen Turm, ein Turmsegment, einen Turmabschnitt, eine Turmsektion für einen Turm, einen Turm und eine Windenergieanlage anzugeben, welche Nachteile existierender Lösungen verringert oder beseitigt. Es ist ferner eine Aufgabe der vorliegenden Erfindung, ein Fertigungsverfahren zum Erzeugen eines Turmsegments, eines Turmabschnitts und einer Turmsektion für einen Turm, ein Turmsegment, einen Turmabschnitt, eine Turmsektion für einen Turm, einen Turm und eine Windenergieanlage anzugeben, welche die Herstellung und/oder die Montage von Turmabschnitten und/oder Türmen von Windenergieanlagen vereinfachen und/oder verbessern und/oder kostengünstiger machen. Es ist ferner eine Aufgabe der vorliegenden Erfindung, ein Fertigungsverfahren zum Erzeugen eines Turmsegments, eines Turmabschnitts und einer Turmsektion für einen Turm, ein Turmsegment, einen Turmabschnitt, eine Turmsektion für einen Turm, einen Turm und eine Windenergieanlage anzugeben, welche die Lebensdauer eines Turmsegments, eines Turmabschnitts, einer Turmsektion für einen Turm, insbesondere für einen Turm einer Windenergieanlage, und eines Turms verbessert.

Diese Aufgabe wird gelöst durch ein Fertigungsverfahren zum Erzeugen eines Turmsegments eines Turms nach Anspruch 1.

Türme von Windenergieanlagen weisen in der Regel im Einbauzustand und im Betriebszustand eine vertikale Längsachse auf und einen ringförmigen Querschnitt orthogonal zu dieser Längsachse. Dieser ringförmige Querschnitt kann beispielsweise kreisringförmig oder elliptisch ausgebildet sein oder auch eine polygonale Form aufweisen. Unter dem Begriff ringförmig wird in dieser Anmeldung nicht nur eine kreisringförmige oder elliptische Ausgestaltung verstanden, sondern auch eine polygonale und/oder mehreckige Ausgestaltung sowie weitere Ausgestaltungen mit mehreren geraden oder gekrümmten Abschnitten.

Begriffe wie längs, radial, tangential, Umfang, Radius, Krümmung etc. werden in dieser Anmeldung vorzugsweis bezogen auf die Längsachse eines Turmes verstanden, und beziehen sich auf jegliche Querschnittsformen eines solchen Turmes, insbesondere sowohl auf kreisringförmige oder elliptische Querschnitte als auch auf polygonale Querschnitte.

Als Einbauzustand wird hier insbesondere ein Zustand verstanden, der sich auf den vertikal ausgerichteten Turm bezieht, der - sofern auf dem Turm eine entsprechend betriebsbereite Gondel mit Rotor angeordnet ist - auch dem Betriebszustand der Windenergieanlage entspricht. Eine im Wesentlichen horizontale Ausrichtung der Längsachse, z.B. bei der Fertigung und/oder Montage und/oder beim Transport des Turms oder Teilen davon, ist hier nicht mit Einbauzustand gemeint. Die für den Einbauzustand beschriebenen Ausrichtungen sind im Fertigungs- und/oder Montagezustand und/oder Transportzustand entsprechend an die temporär nicht vertikal ausgerichtete Längsachse des Turms bzw. eines Teils davon anzupassen.

Ein Turmsegment wird hier verstanden als ein Teil eines ringförmigen Turmabschnitts, also als ein Element, welches sich nur über einen Teil des Umfangs des Turmes erstreckt. Vorzugsweise bilden mehrere in Umfangsrichtung angeordnete Turmsegmente einen ringförmigen Turmabschnitt. Zwischen den Turmsegmenten können in der Regel im Einbauzustand und im Betriebszustand im Wesentlichen vertikal bzw. in Längsrichtung ausgerichtete Längsfugen ausgebildet sein. Es ist bekannt, dass Turmsegmente beispielsweise die Form eines Mantelsegments eines Zylinders oder Kegels oder Kegelstumpfs haben können.

Zwei oder mehrere Turmabschnitte können eine Turmsektion bilden, als solche erstreckt sich der Turmabschnitt in Längsrichtung lediglich über einen Teil der Länge der Turmsektion. Eine Turmsektion wird vorzugsweise aus mehreren ringförmigen Turmabschnitten gebildet, wobei zwischen den ringförmigen Turmabschnitten im Einbauzustand und im Betriebszustand im Wesentlichen horizontal ausgerichtete Umfangsfugen ausgebildet sein können. Ein Turm kann mehrere, im Einbauzustand und im Betriebszustand der Windenergieanlage vertikal übereinander angeordnete, Turmabschnitte umfassen. Zwischen den übereinander angeordneten Turmabschnitten können in der Regel im Einbauzustand und im Betriebszustand im Wesentlichen horizontal bzw. in Umfangsrichtung ausgerichtete Umfangsfugen ausgebildet sein.

Eine Turmsektion wird hier verstanden als ein Teil eines Turms, also als ein Element, welches sich in Längsrichtung lediglich über einen Teil der Länge des Turms erstreckt. Ein Turm kann mehrere, im Einbauzustand und im Betriebszustand der Windenergieanlage vertikal übereinander angeordnete Turmsektionen umfassen. Vorzugsweise weisen die Turmsektionen an ihrem oberen und/oder unteren Ende Anschlusselemente auf, mittels derer Turmsektionen miteinander befestigt, insbesondere verschraubt werden können.

Türme von Windenergieanlagen verjüngen sich in der Regel von ihrem unteren zu ihrem oberen Ende. Die Ausrichtung der Turmwand eines sich verjüngenden Turms weicht in der Regel nur um wenige Grad von der Vertikalen ab. Wenn in dieser Anmeldung auf Ausrichtungen, insbesondere im Einbauzustand oder im Betriebszustand, Bezug genommen wird, wie beispielsweise oben, unten, radial, horizontal, vertikal, tangential, längs, Umfang, Krümmung, Radius etc., soll dies daher entsprechend auch für sich verjüngende Türme und dementsprechend leicht gegenüber der Vertikalen geneigte Turmwände gelten.

Verschiedene Bauweisen für Türme von Windenergieanlagen sind bekannt. Insbesondere haben sich Türme in Massivbauweise, aus Beton und/oder Stahlbeton und/oder Spannbeton und/oder Stahl durchgesetzt. Insoweit sind Turmsegmente bevorzugt aus Beton und/oder Stahlbeton und/oder Spannbeton und/oder Stahl.

Insbesondere aufgrund der großen Durchmesser von ringförmigen Turmabschnitten, sowohl in kreisringförmiger, elliptischer als auch in polygonaler Form, ist es bekannt, Turmabschnitte in Längsrichtung und Umfangsrichtung in Turmsegmente zu unterteilen. Solche Turmsegmente lassen sich leichter herstellen und/oder transportieren als ringförmige Turmabschnitte. Die Turmsegmente weisen in der Regel eine flächige Erstreckung auf, welche die Turmwand bildet. Orthogonal und/oder radial zu der flächigen Erstreckung weist das Turmsegment eine Dicke, also Wandstärke auf, welche in der Regel um ein Vielfaches kleiner ist als die flächige Erstreckung.

Turmsegmente für Türme mit polygonalem Querschnitt sind in der Regel nicht eben ausgebildet. Insbesondere sind Turmsegmente für Türme mit polygonalem Querschnitt in der Regel in Umfangsrichtung nicht eben. Vorzugsweise weisen solche Turmsegmente für Türme mit polygonalem Querschnitt einen Knick bzw. eine Kante auf. Insbesondere kann sich der Knick bzw. die Kante in Längsrichtung des Turmsegments erstrecken. Ferner ist es insbesondere denkbar, dass Turmsegmente für Türme mit polygonalem Querschnitt eben ausgebildet sind. Solche eben ausgebildeten Turmsegmente weisen insbesondere keine Krümmung in ihren flächigen Erstreckungen auf - weder in Umfangsrichtung noch in Längsrichtung. Turmsegmente für Türme mit kreisringförmigem oder elliptischem Querschnitt weisen hingegen in der Regel eine Krümmung bzw. Radius in ihrer flächigen Erstreckung, insbesondere in Umfangsrichtung, auf. Turmsegmente für Türme mit kreisringförmigem Querschnitt weisen vorzugsweise eine in Umfangsrichtung im Wesentlichen konstante Krümmung auf. Turmsegmente für Türme mit elliptischem Querschnitt weisen bevorzugt eine in Umfangsrichtung im Wesentlichen variierende Krümmung auf. Insbesondere kann die Krümmung in Umfangsrichtung entlang der Längsrichtung eines Turmsegments variieren.

In der hier beschriebenen Lösung weist die bereitgestellte Platte in Längsrichtung eine Erstreckung auf, auch Länge genannt, die um ein Vielfaches größer ist als die Erstreckung in Umfangsrichtung, auch Breite genannt. Vorzugsweise steht die Länge der Platte zur Breite in einem Verhältnis von drei zu eins oder mehr und insbesondere von vier zu eins oder mehr. Beispielsweise weist die Platte eine Länge von etwa 12 m und eine Breite von etwa 3 m oder 4 m auf. Vorzugsweise weist die Platte eine Dicke von mindestens 18 mm und maximal 60 mm auf. Es sind auch davon abweichende Längen und/oder Breiten und/oder Dicken denkbar. Vorzugsweise weist die bereitzustellende Platte in Längsrichtung und/oder in Umfangsrichtung eine im Wesentlichen konstante Erstreckung und/oder eine konstante Dicke auf.

Insbesondere ist die bereitzustellende Platte eine einstückige Platte. Vorzugsweise wird eine einstückige Platte durch ein urformendes und/oder umformendes und/oder additives Fertigungsverfahren erzeugt. Insbesondere ist eine einstückige Platte nicht aus zwei oder mehreren Platten zusammengesetzt, etwa geschweißt oder verschraubt.

Mittels des Verfahrensschrittes Walzen lässt sich die Dicke der Platte vorzugsweise variabel einstellen. Das Walzen ist beispielsweise ein Längswalzen oder Reckwalzen. Beim Walzen wird die zu walzende Platte bevorzugt orthogonal zu zwei oder mehreren Walzenachsen durch einen zwischen zwei Walzen definierten Walzenspalt gefördert. Vorzugsweise entspricht die hieraus resultierende Förderrichtung bzw. Walzrichtung im Wesentlichen der Längsrichtung der zu walzenden Platte. Die Walzenachsen sind vorzugsweise im Wesentlichen orthogonal zur Längsrichtung der zu walzenden Platte ausgerichtet und die Walzen parallel zueinander angeordnet. Beim Walzen können ein oder mehrere Walzenpaare die zu walzende Platte fördern. Durch Einstellen des Walzspalts kann die Dicke der Platte eingestellt werden.

Mittels des Walzens wird ein in Längsrichtung der Platte variierendes Dickenprofil eingebracht. Ein solch variierendes Dickenprofil umfasst mindestens zwei unterschiedliche Dicken. Ein Abschnitt eines Dickenprofils mit variierender Dicke wird auch Übergangsabschnitt genannt. Vorzugsweise umfasst das Turmsegment in Längsrichtung einen Übergangsabschnitt. Ferner kann es bevorzugt sein, dass das Turmsegment in Längsrichtung mehrere Übergangsabschnitte aufweist. Es ist ferner insbesondere denkbar, dass ein in Längsrichtung variierendes Dickenprofil eines Turmsegments einen oder mehrere Abschnitte konstanter Dicke aufweisen kann. Ein Abschnitt eines Dickenprofils mit einer konstanten Dicke wird auch Konstantabschnitt genannt. Es kann auch bevorzugt sein, dass das Dickenprofil in Längsrichtung einen oder mehrere Abschnitte mit einer variierenden Dicke (Übergangsabschnitt) aufweist und einen oder mehrere Abschnitte mit einer konstanten Dicke aufweist (Konstantabschnitt).

Insbesondere kann die Dicke des Dickenprofils in Längsrichtung der Platte von einem im Einbauzustand des Turmsegments unteren Ende zu einem oberen Ende zunehmen. Vorzugweise weist ein Turmsegment von einem im Einbauzustand des Turmsegments unteren Ende zu einem oberen Ende einen oder mehrere in der Dicke zunehmende Übergangsabschnitte und/oder einen oder mehrere in der Dicke abnehmende Übergangsabschnitte und/oder einen oder mehrere Konstantabschnitte auf. Ein Dickenprofil mit einem Abschnitt zunehmender Dicke kann einen oder mehrere Abschnitte konstanter Dicke aufweisen. Ferner ist bevorzugt, dass die Dicke des Dickenprofils in Längsrichtung der Platte von einem im Einbauzustand des Turmsegments unteren Ende zu einem oberen Ende abnimmt. Ein Dickenprofil mit einem Abschnitt abnehmender Dicke kann einen oder mehrere Abschnitte konstanter Dicke aufweisen. Insbesondere ist es bevorzugt, dass das Dickenprofil in Längsrichtung einen oder mehrere Abschnitte konvex verlaufender Dickenprofile aufweist und/oder einen oder mehrere Abschnitte konkav verlaufender Dickenprofile aufweist. Vorzugsweise kann das Dickenprofil in Längsrichtung einen oder mehrere Abschnitte stufenförmig verlaufender Dickenprofile umfassen.

Die Dicke des Dickenprofils kann in Längsrichtung der Platte ausgehend von dem im Einbauzustand des Turmsegments unteren Ende zu einer Mitte der Platte zunehmen und/oder von der Mitte der Platte zu dem oberen Ende abnehmen. Ferner kann in bevorzugter Weise die Dicke des Dickenprofils in Längsrichtung der Platte ausgehend von dem im Einbauzustand des Turmsegments unteren Ende zu der Mitte abnehmen und/oder zu dem oberen Ende zunehmen. Vorzugsweise ist die Dicke des Dickenprofils in Längsrichtung der Platte ausgehend von dem im Einbauzustand des Turmsegments unteren Ende zu der Mitte konstant und/oder zu dem oberen Ende konstant. Insbesondere sind weitere Kombinationen zunehmender, abnehmender und konstanter Dicke der Dickenprofile in Längsrichtung einer Platte von dessen im Einbauzustand des Turmsegments unteren Ende zu dessen oberen Ende denkbar.

Vorzugsweise weist das variierende Dickenprofil eines Turmsegments eine kontinuierliche Änderung der Dicke des Turmsegments auf. Das variierende Dickenprofil des Turmsegments kann auch eine oder mehrere diskrete Änderungen der Dicke aufweisen. Bei einer diskreten Änderung der Dicke kann das Dickenprofil des Turmsegments beispielsweise einen Knick oder eine Stufe aufweisen. Insbesondere kann das eingebrachte Dickenprofil eines Turmsegments sowohl kontinuierliche als auch diskrete Änderungen der Dicke aufweisen.

Insbesondere wird beim Walzen in Längsrichtung der Platte eine in Umfangsrichtung der Platte im Wesentlichen konstante Dicke eingebracht. Es kann auch bevorzugt sein beim Walzen in Längsrichtung der Platte eine in Umfangsrichtung der Platte variierende Dicke eingebracht. Insbesondere umfasst das Walzen ein konisches Walzen zum Einbringen einer in Umfangsrichtung der Platte variierenden Dicke.

Insbesondere kann in jenen Abschnitten der Platte eine größere Dicke eingebracht werden, die im Einbauzustand bzw. Betriebszustand in hochbelasteten Bereichen des Turms montiert werden. Ferner ist es bevorzugt, in jene Abschnitte eine größere Dicke einzubringen - üblicherweise in den in Längsrichtung obersten und untersten Abschnitt einer Platte - die mit einem im Einbauzustand bzw. Betriebszustand darüber oder darunter angeordneten Turmsegment zu verbinden sind. Weiterhin ist es bevorzugt, in jene Abschnitte eine größere Dicke einzubringen, an denen Ausnehmungen, Befestigungsanschlüsse etc. vorgesehen sind.

Der Verfahrensschritt Biegen umfasst das Biegen der Platte in Umfangsrichtung, insbesondere wird die Platte mittels eines Biegewerkzeuges um eine Biegeachse orthogonal zur Walzrichtung gebogen. Die Biegeachse ist im Wesentlichen parallel zur Längsrichtung einer zu biegenden Platte. Insbesondere ist beim Biegen eine Biegespannung zu induzieren, die oberhalb der Streckgrenze des Materials der Platte liegt. Vorzugsweise weist die gebogene Platte im Einbauzustand bzw. Betriebszustand in Bezug auf die Längsachse einen Radius bzw. eine Krümmung auf. Vorzugsweise umfasst das Biegen das Einbringen eines Knicks und/oder einer Kante. Der Verfahrensschritt Biegen umfasst insbesondere jegliche Fertigungsverfahren, die geeignet sind, eine Krümmung, Knick und/oder Kante in Umfangsrichtung der Platte einzubringen.

Vorzugsweise umfasst oder ist der Verfahrensschritt Biegen ein Pressen und/oder Schmieden und/oder Tiefziehen und/oder Walzen. Ferner umfasst oder ist der Verfahrensschritt Biegen ein Kanten und/oder Knicken.

Die hier beschriebene Lösung beruht unter anderem auf der Erkenntnis, dass sich Umfangsfugen in Stahltürmen ungünstig auf die Ermüdungsfestigkeit auswirken können. Insbesondere beruht die Erfindung auf der Erkenntnis, dass eine minimierte Anzahl an Umfangsfugen die Ermüdungsfestigkeit solcher Türme verbessert. Ein Vorteil des Fertigungsverfahrens ist, dass ein Turmsegment hergestellt werden kann, mit dem die Anzahl von Umfangsfugen im Turm reduziert und die Lebensdauer des Turms erhöht werden kann.

Ein weiterer Vorteil des Herstellungsverfahrens ist, dass sich die Dicke eines Turmsegments in Längsrichtung bedarfsgerecht, beispielsweise in Abhängigkeit der zu erwartenden Belastung oder der Montierbarkeit, einbringen lässt. Insbesondere lässt sich mit diesem Herstellungsverfahren der Aufwand für den Materialeinsatz, das Gewicht, die Komplexität der Montierbarkeit und somit Kosten reduzieren. Ein weiterer Vorteil des Fertigungsverfahrens ist, dass bei gleichem Materialeinsatz die Lebensdauer des Turms erhöht werden kann.

Vorteilhaft ist ferner, dass sich mit diesem Fertigungsverfahren zum Erzeugen eines Turmsegments, die Wandstärke bzw. Dicke eines Turms in Umfangsrichtung bedarfsgerecht, insbesondere lastgerecht, einstellen lässt. So können in besonders vorteilhafter Weise Turmsegmente mit einer größeren Dicke für die Hautbelastungsrichtung eines Turms erzeugt werden und Turmsegmente mit einer geringeren Dicke für jene Bereiche des Turms, die einer geringeren Belastung unterliegen.

Gemäß einer bevorzugten Ausführungsform umfasst der Schritt des Walzens das Aufwärmen der Platte auf eine Warmwalztemperatur; und/oder Einbringen von mindestens einem Übergangsabschnitt, wobei der Übergangsabschnitt eine variierende Dicke des eingebrachten Dickenprofils aufweist; und/oder Einbringen von mindestens einem Konstantabschnitt, wobei der Konstantabschnitt eine konstante Dicke des eingebrachten Dickenprofils aufweist.

Für den Verfahrensschritt des Walzens ist es bekannt, ein Aufwärmen einer zu walzenden Platte vorzusehen. Ein Walzen der aufgewärmten Platte ist auch als Warmwalzen bekannt. Vorzugsweise wird beim Schritt des Aufwärmens die Platte auf eine Warmwalztemperatur aufgewärmt, die oberhalb, einer Umgebungstemperatur liegt. Insbesondere wird beim Warmwalzen die zu walzende Platte auf eine Warmwalztemperatur aufgewärmt, die oberhalb der Rekristallisationstemperatur des Materials der zu walzenden Platte liegt. Bevorzugt wird die zu walzende Platte beispielsweise auf einer Warmwalztemperatur von etwa 1250°C aufgewärmt.

Das Einbringen eines Dickenprofils mit variierender Dicke entlang der Längsrichtung der Platte umfasst vorzugsweise das Einbringen von mindestens einem Übergangsabschnitt und/oder das Einbringen von mindestens einem Konstantabschnitt. Vorzugsweise weist das in die Platte eingebrachte Dickenprofil einen oder mehrere Übergangsabschnitte und/oder einen oder mehrere Konstantabschnitte auf. Vorzugsweise umfasst das Walzen das Einbringen von mindestens zwei, drei, vier, sechs, acht oder zwölf Übergangsabschnitten und/oder Konstantabschnitten. Insbesondere ist es denkbar, dass ein in eine Platte in Längsrichtung eingebrachtes Dickenprofil lediglich einen einzigen Übergangsabschnitt und/oder lediglich einen einzigen Konstantabschnitt aufweist. Bevorzugt ist ein Konstantabschnitt an einem im Einbauzustand oberen und/oder unteren Ende eines Turmsegments eingebracht. Es sind auch Ausführungsformen denkbar, in denen ein Übergangsabschnitt bevorzugt an einem im Einbauzustand oberen und/oder unteren Ende eines Turmsegments eingebracht ist.

Ein variierendes Dickenprofil eines Turmsegments kann in Längsrichtung von einem im Einbauzustand unteren Ende des Turmsegments zu einem oberen Ende des Turmsegments einen oder mehrere Übergangsabschnitte zunehmender Dicke aufweisen und/oder einen oder mehrere Übergangsabschnitte abnehmender Dicke aufweisen und/oder einen oder mehrere Konstantabschnitte aufweisen. Bevorzugt ist eine Änderung der Dicke des Übergangsabschnitts des Dickenprofils kontinuierlich. Insbesondere ist die kontinuierliche Änderung der Dicke eine stetige Änderung der Dicke. Die kontinuierliche Änderung der Dicke ist vorzugsweise keine sprunghafte Änderung der Dicke. Bei einer sprunghaften Änderung der Dicke kann das Dickenprofil beispielsweise einen Knick oder eine Stufe aufweisen. Ein Übergangsabschnitt kann beispielsweise ein konvex, konkav oder trapezförmig verlaufendes Dickenprofil oder eine Kombination daraus aufweisen. Insbesondere sind bei einer Kombination daraus die Übergänge der Änderung der Dicke zwischen dem konvex, konkav und/oder trapezförmig verlaufenden Dickenprofil eines Abschnitts stetig.

Mittels des Walzens wird vorzugsweise je Konstantabschnitt eine in Umfangsrichtung und Längsrichtung konstante Dicke eingebracht. Insbesondere variiert innerhalb eines Konstantabschnitts die Dicke des Turmsegments im Wesentlichen nicht. Eine konstante Dicke eines Konstantabschnitts kann innerhalb der üblichen fertigungsbedingten Toleranzen schwanken. Das Dickenprofil eines Turmsegments kann in Längsrichtung der Platte einen ersten Konstantabschnitt mit einer ersten Dicke und einen zweiten Konstantabschnitt mit einer zweiten Dicke aufweisen. Vorzugsweise ist die erste Dicke von der zweiten Dicke verschieden, insbesondere ist die erste Dicke größer als die zweite Dicke. Es ist ferner bevorzugt, dass das Walzen ein Einbringen eines Dickenprofils mit mehr als zwei Konstantabschnitten, die jeweils unterschiedliche Dicken aufweisen, umfasst. Es ist denkbar, dass bei einem Turmsegment mit mehreren Konstantabschnitten zwei oder mehrere Konstantabschnitte dieselbe Dicke aufweisen. Insbesondere weisen mehrere mit konstanter Dicke eingebrachte Konstantabschnitte eines Turmsegments voneinander unterschiedliche Dicken auf. Bevorzugt weicht die Dicke benachbarter Konstantabschnitte eines Turmsegments um maximal 250%, besonders bevorzugt um maximal 200%, insbesondere aber maximal um 150% voneinander ab. Insbesondere kann in Längsrichtung kann zwischen benachbarten Konstantabschnitten ein Übergangsabschnitt eingebracht sein.

Vorzugsweise ist eine Änderung der Dicke des Dickenprofils in Längsrichtung von einem Übergangsabschnitt zu einem Konstantabschnitt kontinuierlich. Es kann aber auch bevorzugt sein, dass eine Änderung der Dicke des Dickenprofils in Längsrichtung von einem Übergangsabschnitt zu einem Konstantabschnitt oder zwischen zwei benachbarten Konstantabschnitten diskret verläuft bzw. ist. Ein diskreter Verlauf zwischen benachbarten Abschnitten weist insbesondere eine sprunghafte Änderung auf.

Vorzugsweise weisen ein oder mehrere eingebrachte Übergangsabschnitte und/oder Konstantabschnitte eines Turmsegments eine Erstreckung in Längsrichtung auf, die kleiner ist als die Erstreckung des Turmsegments in Umfangsrichtung. Ferner ist es bevorzugt, dass ein oder mehrere eingebrachte Übergangsabschnitte und/oder Konstantabschnitte eines Turmsegments eine Erstreckung in Längsrichtung aufweisen, die größer ist als die Erstreckung des Turmsegments in Umfangsrichtung. Insbesondere ist es bevorzugt, dass ein oder mehrere eingebrachte Übergangsabschnitte und/oder Konstantabschnitte eines Turmsegments eine Erstreckung in Längsrichtung aufweisen, die kleiner ist als die Erstreckung des Turmsegments in Umfangsrichtung und ein oder mehrere eingebrachte Übergangsabschnitte und/oder Konstantabschnitte eines Turmsegments eine Erstreckung in Längsrichtung aufweisen, die größer ist als die Erstreckung des Turmsegments in Umfangsrichtung. Insbesondere kann es bevorzugt sein, dass ein oder mehrere Übergangsabschnitte eine größere Erstreckung in Längsrichtung eines Turmsegments aufweisen als ein oder mehrere Konstantabschnitte.

In vorteilhafter Weise lässt sich durch das Aufwärmen der Platte das einzubringende Dickenprofil wesentlich leichter und genauer einbringen. Insbesondere können durch das Aufwärmen Kosten beim Walzen der Platte eingespart werden.

Ein weiterer Vorteil ist, dass durch das Einbringen einer in Längsrichtung und Umfangsrichtung konstanten Dicke je Konstantabschnitt beispielsweise Werkzeuge und Formen geringerer Komplexität zum Erzeugen eines Turmsegments genutzt und Kosten eingespart werden können.

Vorteilhaft ist ferner, dass insbesondere durch das Einbringen eines Übergangsabschnitts zwischen benachbarten Konstantabschnitten die Kerbwirkung bei solch erzeugten Turmsegmenten reduziert wird und somit die Lebensdauer von Türmen steigt, die solche erzeugten Turmsegmente umfassen. Ein weiterer Vorteil ist, dass bei gleicher Lebensdauer eines Turmsegments bzw. Turms Material eingespart werden kann.

Gemäß einer weiteren bevorzugten Ausführungsform werden ein Übergangsabschnitt und ein Konstantabschnitt derart in die Platte eingebracht, dass der Übergangsabschnitt im Einbauzustand oberhalb oder unterhalb des Konstantabschnitts angeordnet ist. Insbesondere sind der Übergangsabschnitt und der Konstantabschnitt derart angeordnet, dass der Übergangsabschnitt in Längsrichtung in den Konstantabschnitt übergeht. Vorzugsweise sind der Übergangsabschnitt und der Konstantabschnitt im Wesentlichen parallel zueinander angeordnet. Parallel zueinander angeordnet heißt, dass der Übergangsabschnitt über die komplette Breite des Turmsegments im Wesentlichen senkrecht zur Erstreckung des Turmsegmentes in Umfangsrichtung in den Konstantabschnitt übergeht.

Eine solche Anordnung hat den technischen Effekt, dass das Dickenprofil eines Turmsegments in Längsrichtung für die im Einbauzustand bzw. Betriebszustand zu erwartenden Belastung besonders lastgerecht eingebracht werden kann. Insbesondere hat diese bevorzugte Anordnung den Vorteil, dass der Materialeinsatz weiter reduziert wird.

Ferner ist in einer bevorzugten Ausführungsform des Fertigungsverfahrens vorgesehen, dass mindestens ein Übergangsabschnitt in Längsrichtung zwischen zwei eingebrachten Konstantabschnitten eingebracht und angeordnet ist; und/oder mindestens ein Konstantabschnitt in Längsrichtung zwischen zwei eingebrachten Übergangsabschnitten eingebracht und angeordnet ist.

Zum Verbinden zweier benachbarter Konstantabschnitte eines Turmsegments umfasst das Walzen vorzugsweise das Einbringen eines Übergangsabschnitts zwischen zwei benachbarten Turmsegmenten. Insbesondere ist der Übergangsabschnitt zwischen den beiden Konstantabschnitten derart eingebracht, dass der Übergang des Dickenprofils in Längsrichtung zwischen den einzelnen Abschnitten vorzugsweise kontinuierlich ist. Es kann bevorzugt sein, dass ein Übergang des Dickenprofils in Längsrichtung von dem einen Konstantabschnitt zu dem Übergangsabschnitt kontinuierlich ist und der weitere Übergang des Dickenprofils von dem Übergangsabschnitt zu dem weiteren Konstantabschnitt diskret verläuft. Es ist ferner denkbar, dass die Übergänge des Dickenprofils zwischen dem Übergangsabschnitt und den beiden Konstantabschnitten jeweils diskret verlaufen.

Vorzugsweise weisen die Konstantabschnitte, zwischen die der Übergangsabschnitt eingebracht wird, voneinander unterschiedliche Dicken auf. Die Dicke des Übergangsabschnitts kann zwischen den Dicken der Konstantabschnitte variieren. Insbesondere umfasst das Einbringen eines Übergangsabschnitts ein Anpassen der Dicke von dem ersten zu dem zweiten Konstantabschnitt. Beim Einbringen des Übergangsabschnitts kann die Dicke in Längsrichtung der zu walzenden Platte zunehmen oder abnehmen. Insbesondere ist die Länge des jeweiligen Übergangsabschnitts und/oder die Veränderung der Dicke über die Länge in Abhängigkeit fertigungsbedingter Restriktionen, etwa der Walzendurchmesser und/oder mit Blick auf eine vorzugsweise minimale Kerbwirkung einzubringen. Beim Einbringen eines Übergangsabschnitts ist die Länge eines Übergangsabschnitts vorzugsweise größer als die Länge von mindestens einem der beiden zu verbindenden Konstantabschnitte. Insbesondere kann der Übergangsabschnitt auch länger als die zu verbindenden Konstantabschnitte sein. Es kann auch bevorzugt sein, dass der einzubringende Übergangsabschnitt mit einer Länge eingebracht wird, die kleiner ist als die Länge von mindestens einem der beiden zu verbindenden Konstantabschnitte.

Die Ausführungen gelten analog für den Konstantabschnitt, der in Längsrichtung zwischen zwei eingebrachten Übergangsabschnitten eingebracht und angeordnet wird.

Eine solche Anordnung hat den technischen Effekt, dass auf Übergänge zwischen Abschnitten mit unterschiedlichen Dicken, insbesondere zwischen Konstantabschnitten mit unterschiedlichen Dicken, die Kerbwirkung besonders vorteilhaft reduziert wird.

Insbesondere hat diese bevorzugte Anordnung den Vorteil, den Materialeinsatz weiter zu reduzieren.

In einer bevorzugten Ausführungsform umfasst der Schritt des Biegens das Aufwärmen der Platte auf eine Warmbiegetemperatur; und/oder Einbringen einer Krümmung in Umfangsrichtung in die Platte, wobei das Einbringen der Krümmung vorzugsweise ein Einbringen der Krümmung mittels plastischem Warmverformen und/oder vorzugsweise ein Einbringen einer in Umfangsrichtung der Platte konstanten Krümmung umfasst; und/oder Aufeinander Anordnen von mindestens zwei Platten im Wesentlichen orthogonal zur Längsrichtung und Umfangsrichtung der Platte; und/oder Anordnen der Platte an einer Form. Vorzugsweise ist die Form eine Gitterform und insbesondere eine Gitterform mit einem Deckblech. Es ist ferner bevorzugt, dass die Form ein Betonklotz ist.

Durch das Aufwärmen der Platte auf eine Warmbiegetemperatur kann die Platte in vorteilhafter Weise mit einer geringeren Biegekraft gebogen werden. Vorzugsweise ist die Warmbiegetemperatur in einem solchen Temperaturintervall zu wählen bzw. einzustellen, in dem das Gefüge der zu biegenden Platte sich gegenüber dem Gefüge bei Raumtemperatur nicht verändert. Vorzugsweise wird die Platte auf eine Warmbiegetemperatur von etwa 630°C aufgewärmt. Insbesondere wird die Platte plastisch warmverformt. Durch das plastische Warmverformen lässt sich die Platte im Vergleich zum Verformen bei Raumtemperatur mit einer geringen Biegekraft biegen und eine entsprechende Krümmung einbringen. Es ist vorgesehen, dass ein Konstantabschnitt bevorzugt eine in Umfangsrichtung konstante Krümmung aufweist. Zylinderförmige Turmsegmente und zylinderförmige Konstantabschnitte weisen eine in Längsrichtung im Wesentlichen konstante Krümmung auf. Insbesondere reduziert das plastische Warmverformen in vorteilhafter Weise die Gefahr, dass Material reist oder sich Quetschfalten bilden, und kann somit die Lebensdauer des Turmsegments erhöhen und beispielsweise Ausschusskosten reduzieren. Bevorzugt werden zu biegende Platten konisch warmgeformt.

Insbesondere können mehrere Platten in einem einzigen Vorgang gebogen werden. Hierzu können zwei oder mehrere Platten aufeinander angeordnet werden. In die aufeinander angeordneten Platten kann eine Krümmung, beispielsweise mittels des plastischen Warmverformens, eingebrachte werden. In vorteilhafter Weise kann das gleichzeitige Biegen von aufeinander angeordneten Platten Herstellungszeit und damit Kosten einsparen.

Vorzugsweise ist die Form eine Negativform des zu fertigenden Turmsegments. Insbesondere ist die Form in Umfangsrichtung eine konkave und/oder konvexe Negativform des Turmsegments. Insbesondere weist die Form in Umfangsrichtung und/oder in Längsrichtung eine Krümmung auf, die der Krümmung des herzustellenden Turmsegments in Umfangsrichtung und/oder Längsrichtung entspricht. In vorteilhafter Weise lässt sich durch eine Gitterform, insbesondere durch eine Gitterform mit Deckblechen, oder durch eine Form als Betonklotz die Form für das jeweilige zu fertigende Turmsegment schnell und kostengünstig erzielen. Ferner kann durch die Gitterform die von der Warmbiegetemperatur abhängige Wärme schnell und kostengünstig von der Platte abgeführt werden.

In einer bevorzugten Ausführungsform ist vorgesehen, dass die Dicke des mindestens einen Übergangsabschnitts stufenlos oder abgestuft variiert, und/oder die in Umfangsrichtung eingebrachte Krümmung entlang der Längsrichtung der Platte variiert.

In vorteilhafter Weise weist ein gemäß dieser Ausführungsform erzeugtes Turmsegment, sowohl mit einem stufenlosen als auch mit einem abgestuften Übergangsabschnitt, bei Belastung eine reduzierte Kerbwirkung und somit eine erhöhte Lebensdauer auf. Vorzugsweise wird beim Einbringen des Übergangsabschnitts der Übergang von dem ersten Konstantabschnitt zum Übergangsabschnitt und der Übergang vom Übergangsabschnitt zum zweiten Konstantabschnitt abgerundet eingebracht. Ein stufenloser Übergangsabschnitt weist im Wesentlichen orthogonal zur Umfangsrichtung beispielsweise ein trapezförmiges Dickenprofil auf. Die Dicke nimmt bei einem trapezförmigen Dickenprofil konstant (linear) ab bzw. zu. Alternativ und/oder ergänzend kann auch bevorzugt sein, dass ein stufenloser Übergangsabschnitt ein konvex und/oder konkav verlaufendes Dickenprofil aufweist. Bei einem abgestuften Übergangsabschnitt weist der Dickenverlauf eine oder mehrere diskrete Änderungen im Dickenprofil auf. Insbesondere umfasst ein abgestufter Übergangsabschnitt ein nicht stetig verlaufendes Dickenprofil auf.

Die Krümmung bzw. der Radius eines Turmsegments kann im Einbauzustand in Längsrichtung variieren, insbesondere in Abhängigkeit der Neigung des Turmsegments bzw. des Turms im Einbauzustand bzw. Betriebszustand gegenüber der Längsachse. Insbesondere weist ein im Einbauzustand bzw. Betriebszustand gegenüber einer Längsachse geneigtes Turmsegment bzw. ein kegelförmiges Turmsegment in Längsrichtung eine variierende Krümmung auf. Ein sich im Einbauzustand von unten nach oben verjüngendes Turmsegment weist eine von der Länge bzw. Höhe des Turmsegments abhängige Krümmung in Umfangsrichtung auf. Insbesondere nimmt die Krümmung eines sich verjüngenden Turmsegment von unten nach oben, also mit zunehmender Höhe, zu.

Ein solch besonders ausgestalteter Übergangsabschnitt hat den technischen Effekt, die an den Turmsegmenten unter Last auftretende Kerbwirkung in besonders geeigneter Weise zu reduzieren. Ferner hat eine in Umfangsrichtung variierende Krümmung den Vorteil, dass die Dicke des Turmsegments lastgerecht eingestellt werden kann. Insbesondere hat ein solch ausgeführtes Turmsegment den technischen Effekt, das Material eingespart wird. Insbesondere kann die Lebensdauer eines Turmsegments bzw. eines Turms bei gleichem Materialeinsatz erhöht werden.

In einer weiteren bevorzugten Ausführungsform umfasst das Fertigungsverfahren den Schritt, Erzeugen mindestens einer Stoßfläche an der Platte zum Verbinden von mindestens einer weiteren Platte, wobei das Erzeugen der mindestens einen Stoßfläche das Erzeugen mindestens einer Längsstoßfläche zum Verbinden mindestens einer weiteren Platte in Umfangsrichtung, und/oder das Erzeugen mindestens einer Umfangsstoßfläche zum Verbinden mindestens einer weiteren Platte in Längsrichtung, und/oder das Entfernen eines Randabschnitts der Platte umfasst.

Das Erzeugen einer Stoßfläche umfasst insbesondere das Trennen, beispielsweise das Zerspanen, das Stanzen oder das Erodieren. Insbesondere umfasst das Erzeugen der Stoßfläche vorbereitende Schritte zum Verbinden von Platten miteinander. Besonders bevorzugt ist, dass die zu erzeugende Stoßfläche für eine Stoßverbindung ausgebildet ist. Ferner kann es vorgesehen sein, die zu erzeugende Stoßfläche für eine Überlappverbindung auszubilden. Beispielsweise kann die Stoßfläche für eine Überlappverbindung für eine Schraubverbindung erzeugt werden. Besonders bevorzugt sind die Stoßflächen für eine Schweißverbindung ausgebildet. Insbesondere umfasst das Erzeugen der Stoßfläche das Erzeugen einer Nahtform für eine Schweißverbindung. Beispielsweise sind die I-Naht, V-Naht, HV-Naht, Y-Naht, HY-Naht etc. bevorzugte zu erzeugende Nahtformen.

Vorzugsweise umfasst der Schritt des Erzeugens von Stoßflächen das Erzeugen einer Längsstoßfläche und das Erzeugen einer gegenüber der Längsrichtung im Wesentlichen orthogonal ausgerichteten Umfangsstoßfläche. Durch Erzeugen einer Längsstoßfläche lassen sich zwei oder mehrere Turmsegmente in Umfangsrichtung miteinander verbinden. Bevorzugt bilden acht, besonders bevorzugt zehn oder mehr Turmsegmente einen ringförmigen Turmabschnitt. Durch das Verbinden der Platten über die Längsstoßflächen lässt sich in vorteilhafter Weise die Anzahl der Umfangsstoßflächen in einem Turm reduzieren und die Lebensdauer erhöhen.

Das Entfernen eines Randabschnitts am Turmsegment umfasst insbesondere das Einstellen bzw. Erzielen einer geforderten Neigung des Turms. Insbesondere das Autogenschneiden, Plasmaschneiden, Laserschneiden oder Wasserstrahlschneiden sind geeignete Fertigungsverfahren zum Entfernen eines Randabschnitts von einer Platte. Ferner kann das Entfernen eines Randabschnitts von einer Platte durch spanende Fertigungsverfahren erfolgen.

Gemäß einem weiteren Aspekt wird die eingangs genannte Aufgabe gelöst durch Fertigungsverfahren zur Herstellung eines Turmabschnitts, mit dem Schritt: Verbinden zweier Platten erzeugt nach einem zuvor beschriebenen Fertigungsverfahren an den entsprechenden Längsstoßflächen, wobei das Verbinden umfasst: Anordnen und Fixieren benachbarter Platten zueinander entlang der Längsstoßflächen zu einem ringförmigen Turmabschnitt in Umfangsrichtung; und Herstellen einer Längs-Schweißverbindung zwischen den benachbarten Platten entlang der Längsstoßflächen.

Auf diese Weise kann in einem ringförmigen Turmabschnitt die Dicke in Umfangsrichtung in Abhängigkeit der auftretenden Belastung im Einbauzustand bzw. Betriebszustand variieren. Insbesondere können solche Platten bzw. Turmsegmente, die quer und/oder im Wesentlichen quer zur Hauptbelastungsrichtung, beispielsweise quer zur Hauptwindrichtung angeordnet werden, eine größere Dicke aufweisen als Turmsegmente, die im Einbauzustand bzw. Betriebszustand im Wesentlichen parallel zur Hauptbelastungsrichtung angeordnet werden. Vorzugsweise sind die Dickenprofile zu verbindender und im Einbauzustand benachbarter Turmsegmente ähnlich. Bevorzugt variiert die Dicke zu verbindender Turmsegmente in Umfangsrichtung eines herzustellenden Turmabschnitts. Insbesondere nimmt die Dicke zu verbindender Turmsegmente in Umfangsrichtung des Turmabschnitts ab und/oder zu.

Insbesondere können zwei Platten miteinander verbunden werden, wobei ein erstes Dickenprofil eines ersten Abschnitts oder ein zweites Dickenprofil eines zweiten Abschnitts eines ersten Turmsegments von einem ersten Dickenprofil eines ersten Abschnitts oder einem zweiten Dickenprofil eines zweiten Abschnitts eines zweiten Turmsegments verschieden sind. Vorzugsweise sind das erste Dickenprofil des ersten Abschnitts der einen Platte und das erste Dickenprofil des ersten Abschnitts der anderen Platte im Wesentlichen gleich. Ferner vorzugsweise sind das zweite Dickenprofil des zweiten Abschnitts der einen Platte und das zweite Dickenprofil des zweiten Abschnitts der anderen Platte im Wesentlichen gleich. Besonders bevorzugt ist das erste Dickenprofil des ersten Abschnitts der einen Platte von dem ersten Dickenprofil des ersten Abschnitts der weiteren Platte und/oder das zweite Dickenprofil des zweiten Abschnitts der einen Platte von dem zweiten Dickenprofil des zweiten Abschnitts der weiteren Platte verschieden. Vorzugsweise ist der erste Abschnitt in der Längsrichtung des Turmsegments im Einbauzustand unterhalb des zweiten Abschnitts angeordnet. Der erste und zweite Abschnitt können sowohl ein Übergangsabschnitt als auch ein Konstantabschnitt sein. Insbesondere sind die Stoßflächen der zu verbindenden Turmsegmente ähnlich.

Durch das Verbinden von Platten an den Längsstoßflächen weist ein Turmabschnitt über seine Höhe im Vergleich zu herkömmlichen Türmen eine Wesentlich geringere Anzahl an Umfangsstoßflächen und insofern insbesondere auch eine geringere Anzahl an Umfangs-Schweißverbindungen auf. Auf diese Weise kann die Kerbfestigkeit und insbesondere die Lebensdauer von Türmen mit solch erzeugten Turmabschnitten erheblich erhöht werden. Ferner nimmt der Wartungs- und/oder Inspektionsaufwand mit der geringeren Anzahl der Umfangs-Schweißverbindungen ab.

In bevorzugter Weise werden benachbarte Platten über einen Stumpfstoß miteinander verbunden. Es ist ferner denkbar, die zwei Platten mit einem Überlappstoß oder einem Bördelstoß miteinander zu verbinden. Vorzugsweise umfasst das Herstellen einer Längs-Schweißnahtverbindung das Herstellen einer I-Naht, V-Naht, HV-Naht, Y-Naht, HY-Naht etc. Insbesondere ist eine Längs-Schweißnahtverbindung an den entsprechenden Längsstoßflächen vorgesehen.

Gemäß einem weiteren Aspekt wird die eingangs genannte Aufgabe gelöst durch ein Fertigungsverfahren zur Herstellung einer Turmsektion, mit dem Schritt: Verbinden von zwei oder mehreren Turmabschnitten erzeugt nach einem zuvor beschriebenen Fertigungsverfahren an den entsprechenden Umfangsstoßflächen, wobei das Verbinden umfasst: Anordnen und Fixieren benachbarter Turmabschnitte zueinander entlang der Umfangsstoßflächen zu einer Turmsektion in Längsrichtung; und Herstellen einer Umfangs-Schweißverbindung zwischen den benachbarten Turmabschnitten entlang der Umfangsstoßflächen.

Die Ausführungen zum zuvor beschriebenen Verfahrensschritt Verbinden zweier Platten an den entsprechenden Längsstoßflächen gilt analog für das Herstellen einer Turmsektion, insbesondere für das Verbinden von zwei oder mehr Turmabschnitten. Vorzugsweise werden Turmsektionen mit einer Länge von etwa 24 m oder 28 m hergestellt.

Auf diese Weise hergestellte Turmsektionen weisen eine vergleichsweise geringe Anzahl an Umfangs-Schweißverbindungen auf. Insbesondere wirkt sich diese reduzierte Anzahl an Umfangs-Schweißverbindungen positiv auf die Lebensdauer von Türmen aus, die solche Turmsektionen umfassen. Ein weiterer Vorteil ist, dass bei gleicher Lebensdauer eines Turmsegments bzw. eines Turms Material eingespart werden kann.

In einer bevorzugten Ausführungsform umfasst das Fertigungsverfahren den Schritt Schleifen der Umfangs-Schweißverbindung und/oder Schleifen der Längs-Schweißverbindung, und/oder Glühen der Platten im Bereich der Umfangs-Schweißverbindung und/oder Glühen der Längs-Schweißverbindung. Zusätzlich und/oder alternativ können insbesondere auch weitere Nachbehandlungsschritte durchgeführt werden.

Das Schleifen umfasst insbesondere das Ebenschleifen der Umfangs-Schweißverbindung und/oder Längsschweißverbindung. Beim Ebenschleifen wird die entsprechende Schweißverbindung bevorzugt plan zur Turmaußenwand und/oder Turminnenwand geschliffen. Auf diese Weise lässt sich die Kerbwirkung der Turmsektion im Einbauzustand bzw. Betriebszustand in vorteilhafter Weise reduzieren. Insbesondere eine Turmsektion mit einer geschliffenen und/oder geglühten Umfangs-Schweißverbindung weist eine erheblich reduzierte Kerbwirkung und damit erhöhte Lebensdauer auf. Besonders bevorzugt sind solche Turmsektionen, bei denen sowohl die Umfangs- als auch die Längs-Schweißverbindung geschliffen und geglüht werden.

Gemäß einem weiteren Aspekt wird die eingangs genannte Aufgabe gelöst durch ein Turmsegment eines Turm, nach Anspruch 9. Vorzugsweise geht das Dickenprofil des Turmsegments von dem Übergangsabschnitt in den Konstantabschnitt kontinuierlich über. Insbesondere weist die Platte einen Übergangsabschnitt auf, wobei der Übergangsabschnitt zwischen einem ersten und einem zweiten Konstantabschnitt angeordnet ist. Bevorzugt variiert die Dicke des Übergangsquerschnitts in Längsrichtung der Platte zwischen der ersten Dicke und der zweiten Dicke des ersten und zweiten Konstantabschnitts.

Gemäß einem weiteren Aspekt wird die eingangs genannte Aufgabe gelöst durch einen Turmabschnitt eines Turms, insbesondere eines Turms einer Windenergieanlage, umfassend zwei, drei oder mehrere zuvor beschriebene Turmsegmente, wobei die Turmsegmente in Umfangsrichtung ringförmig oder als ringförmiger Teilabschnitt angeordnet und benachbarte Turmsegmente an den Längsstoßflächen miteinander befestigt sind. Insbesondere sind die in Umfangsrichtung benachbarten Turmsegmente an den Längsstoßflächen mittels einer Längs-Schweißverbindung miteinander befestigt.

In einer bevorzugten Ausführungsform des Turmabschnitts ist vorgesehen, dass im Einbauzustand die Dicke in Umfangsrichtung, insbesondere zwischen mindestens zwei Turmsegmenten, verschieden ist.

Gemäß einem weiteren Aspekt wird die eingangs genannte Aufgabe gelöst durch eine Turmsektion eines Turms, insbesondere eines Turms einer Windenergieanlage, umfassend zwei, drei oder mehrere zuvor beschriebene Turmabschnitte, wobei die Turmabschnitte im Einbauzustand in Längsrichtung aufeinander angeordnet und benachbarte Turmabschnitte an den Umfangsstoßflächen miteinander befestigt sind. Insbesondere ist beispielsweise bevorzugt, dass die jeweiligen Längsstoßflächen der in Längsrichtung aufeinander angeordneten Turmabschnitte fluchten. Es ist aber auch bevorzugt, benachbarte Turmabschnitte in Längsrichtung derart aufeinander anzuordnen, dass die Längsstoßflächen der jeweiligen Turmabschnitte in Umfangsrichtung versetzt sind - die Turmabschnitte also mauerwerkartig angeordnet sind. Insbesondere sind die in Längsrichtung benachbarten Turmabschnitte an den Umfangsstoßflächen mittels einer Umfangs-Schweißverbindung miteinander befestigt.

Gemäß einer bevorzugten Ausführungsform der Turmsektion ist vorgesehen, dass die Turmsektion an einem in Längsrichtung im Einbauzustand oberen Ende einen oberen Ringflansch zur Befestigung einer weiteren Turmsektion oder Gondel aufweist, und/oder an einem in Längsrichtung im Einbauzustand unteren Ende einen unteren Ringflansch zur Befestigung einer weiteren Turmsektion oder eines Fundaments aufweist.

Gemäß einem weiteren Aspekt wird die eingangs genannte Aufgabe gelöst durch einen Turm, umfassend eine zuvor beschriebene Turmsektion.

Gemäß einem weiteren Aspekt wird die eingangs genannte Aufgabe gelöst durch eine Windenergieanlage, umfassend einen zuvor beschriebenen Turm.

Gemäß einem weiteren Aspekt wird die eingangs genannte Aufgabe gelöst durch eine Verwendung eines zuvor beschriebenen Turmsegments und/oder eines zuvor beschriebenen Turmabschnitts und/oder einer zuvor beschriebenen Turmsektion in einem Turm, insbesondere in einem Turm für eine Windenergieanlage.

Das Turmsegment, der Turmabschnitt, die Turmsektion, der Turm und die Windenergieanlage und die jeweiligen möglichen Fortbildungen davon weisen Merkmale auf, die sie insbesondere dafür geeignet machen, mittels der zuvor beschriebenen Fertigungsverfahren für ein Turmsegment, ein Turmabschnitt und eine Turmsektion für einen Turm, insbesondere für einen Turm einer Windenergieanlage, und den möglichen Fortbildungen der Fertigungsverfahren erzeugt zu werden. Insbesondere kann ein/e erfindungsgemäße/r Turmabschnitt und/oder eine Turmsektion und/oder ein Turm gemäß der Erfindung hergestellte Turmsegmente bzw. erfindungsgemäße Turmsegmente sowie mit alternativen Fertigungsverfahren erzeugte Turmsegmente umfassen. Vorzugsweise umfasst der Turm gemäß der Erfindung mindestens ein Turmsegment und/oder mindestens einen Turmabschnitt und/oder mindestens eine Turmsektion, die mit einem zuvor beschriebenen Fertigungsverfahren gemäß der Erfindung erzeugt werden.

Zu den Vorteilen, Ausführungsvarianten und Ausführungsdetails dieser weiteren Aspekte und ihrer möglichen Fortbildungen wird ergänzend auf die vorangegangene Beschreibung zu den entsprechenden Merkmalen bzw. Verfahrensschritten der Fertigungsverfahren zum Erzeugen eines Turmsegments, eines Turmabschnitts und einer Turmsektion verwiesen.

Bevorzugte Ausführungsformen der Erfindung werden beispielhaft anhand der beiliegenden Figuren beschrieben. Es zeigen:
- Figur 1:: eine schematische dreidimensionale Ansicht einer Windenergieanlage mit einem Turm und einer Gondel;
- Figur 2:: ein schematisches Blockdiagramm, das die Schritte einer exemplarischen Ausführungsform eines Herstellungsverfahrens zum Herstellen eines Turmsegments zeigt;
- Figur 3:: ein schematisches Blockdiagramm, das exemplarische Schritte des Verfahrens Walzen zeigt;
- Figur 4: ein schematisches Blockdiagramm, das exemplarische Schritte des Verfahrens Biegen zeigt;
- Figur 5a:: eine schematische zweidimensionale Ansicht eines Turmsegments für einen Turm;
- Figur 5b:: eine Schnittansicht A-A durch das in Figur 2a gezeigte Turmsegment;
- Figur 5c:: eine Draufsicht auf das in Figur 2a gezeigte Turmsegment;
- Figur 6:: eine schematische dreidimensionale Ansicht des in Figur 2a gezeigten Turmsegments vor und nach dem Verfahrensschritt Biegen sowie eine schematische dreidimensionale Ansicht einer Form zum Biegen des Turmsegments;
- Figur 6a:: eine Schnittansicht A-A eines Turmsegments einer weiteren Ausführungsform mit einem Dickenprofil umfassend einen Konstantabschnitt und einem Übergangsabschnitt;
- Figur 7:: ein schematisches Blockdiagramm, das die Schritte einer weiteren Ausführungsform eines Herstellungsverfahrens zum Herstellen eines Turmsegments zeigt;
- Figur 8:: ein schematisches Blockdiagramm, das exemplarische Schritte des Verfahrens Erzeugen einer Stoßfläche zeigt;
- Figur 9a:: eine schematische zweidimensionale Ansicht eines weiteren Turmsegments für einen Turm;
- Figur 9b:: eine schematische Darstellung eines Dickenprofils des in Figur 9a gezeigten Turmsegments;
- Figur 9c:: eine schematische Darstellung eines weiteren Dickenprofils des in Figur 9a gezeigten Turmsegments;
- Figur 10:: ein schematisches Blockdiagramm, das exemplarische Schritte des Verfahrens Verbinden zweier Platten zeigt;
- Figur 11:: eine schematische dreidimensionale Ansicht eines Turmabschnitts mit mehreren in Umfangsrichtung ringförmig angeordneten Turmsegmenten;
- Figur 12:: ein schematisches Blockdiagramm, das exemplarische Schritte des Verfahrens Verbinden zweier oder mehrerer in Längsrichtung parallel zueinander angeordneter Turmabschnitte und das Schleifen und Glühen von Stoßflächen zeigt;
- Figur 13:: eine schematische dreidimensionale Ansicht einer Turmsektion umfassend zweier in Längsrichtung parallel zueinander angeordneter Turmabschnitte;

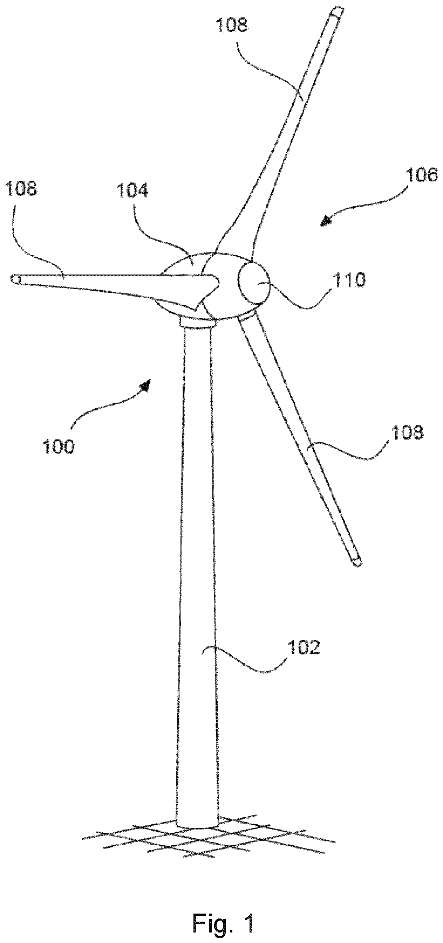

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

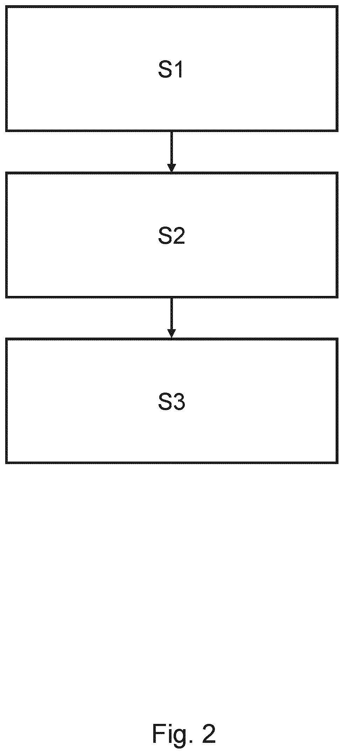

Figur 2 zeigt ein Fertigungsverfahren zum Erzeugen eines Turmsegments 1 eines Turms 102, beispielsweise eines Turms 102 einer in Figur 1 gezeigten Windenergieanlage 100. Das Fertigungsverfahren umfasst die Schritte Bereitstellen S1, Walzen S2 und Biegen S3 einer Platte 1a.

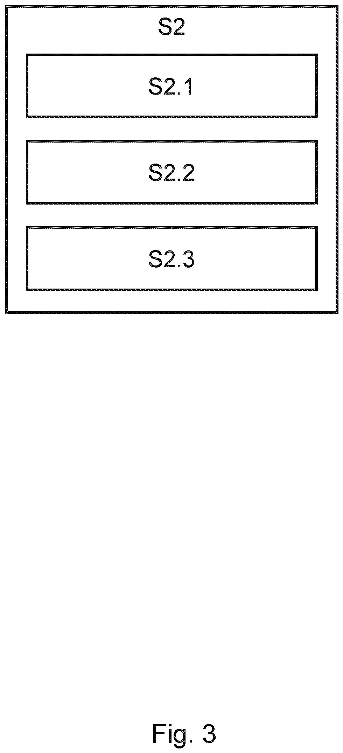

Figur 3 zeigt ein schematisches Blockdiagramm mit exemplarischen Verfahrensschritten des Walzens S2. Das Walzen S2 kann insbesondere das Aufwärmen S2.1 der Platte 1a auf eine Warmwalztemperatur, und/oder das Einbringen S2.2 von mindestens einem Übergangsabschnitt Ü, und/oder das Einbringen S2.3 von mindestens einem Konstantabschnitt K1, K2, K3, K4, K5 umfassen. Insbesondere kann der Verfahrensschritt Walzen S2 weitere umformende und/oder wärmebehandelnde Verfahrensschritte umfassen.

Beim Einbringen S2.2 von dem mindestens einen Übergangsabschnitt Ü ist insbesondere vorgesehen, dass das eingebrachte Dickenprofil eine variierende Dicke dÜ aufweist. Das Dickenprofil eines Übergangsabschnitts Ü weist vorzugsweise mindestens zwei unterschiedliche Dicken dÜ auf. Beim Einbringen S2.3 von dem mindestens einen Konstantabschnitt K1, K2, K3, K4, K5 ist insbesondere vorgesehen, dass ein Konstantabschnitt K eine im Wesentlichen konstante Dicke d1, d2, d3, d4, d5 aufweist. Voneinander verschiedene Konstantabschnitte K1, K2, K3, K4, K5 können unterschiedliche konstante Dicken d1, d2, d3, d4, d5 aufweisen. Es ist denkbar, dass ein oder mehrere Konstantabschnitt dieselbe Dicke aufweisen.

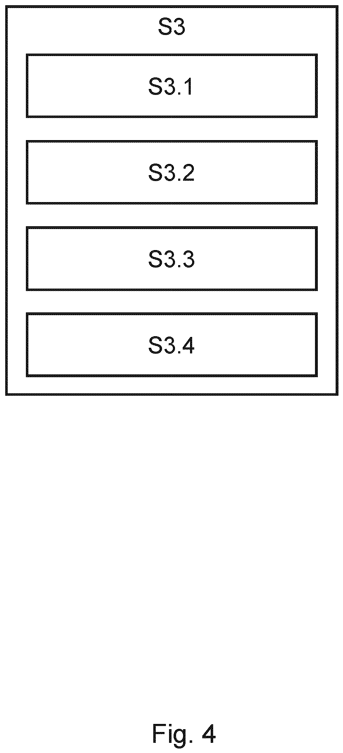

Figur 4 zeigt ein schematisches Blockdiagramm mit exemplarischen Verfahrensschritten des Biegens S3. Der Verfahrensschritt des Biegens S3 umfasst die Schritte Aufwärmen S3.1 der Platte auf eine Warmbiegetemperatur, und/oder das Einbringen S3.2 einer Krümmung x1, x2 in Umfangsrichtung U in die Platte 1a, und/oder das aufeinander Anordnen S3.3 von mindestens zwei Platten 1a im Wesentlichen orthogonal zur Längsrichtung L und Umfangsrichtung U der Platten 1a, und/oder das Anordnen S3.4 der Platte an einer Form 40. Insbesondere wird die Platte 1a auf einer Form 40 angeordnet, die eine Gitterform und/oder eine Beton umfassende Form ist.

Vorzugsweise umfasst das Einbringen S3.2 einer Krümmung x1, x2 in Umfangsrichtung U in die Platte 1a ein Einbringen der Krümmung mittels plastischem Warmverformen. Für das Warmverformen wird die Platte 1a auf eine Warmverformungstemperatur aufgewärmt, die oberhalb einer Umgebungstemperatur liegt. Insbesondere ist es ferner bevorzugt, eine in Umfangsrichtung U konstante Krümmung x1, x2 in die Platte 1a einzubringen.

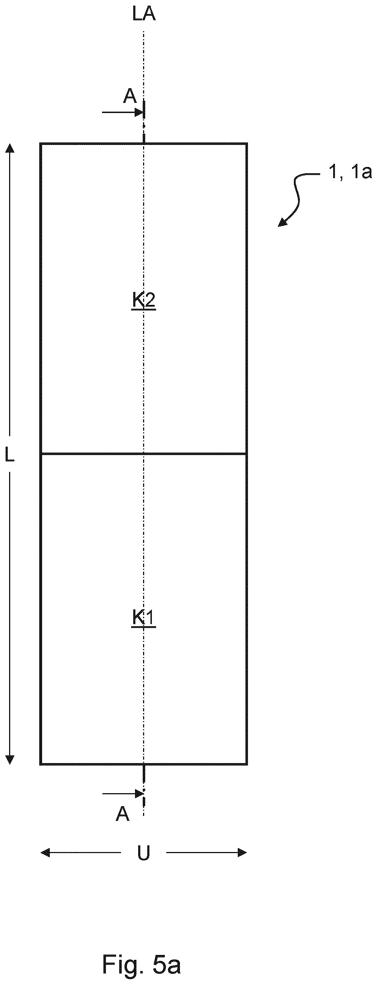

Figuren 5a-5c zeigen ein gemäß dem in Figur 2 dargestellten Fertigungsverfahren erzeugtes Turmsegment 1.

Gemäß dem in Figur 2 gezeigten Fertigungsverfahren ist vorgesehen, eine Platte 1a bereitzustellen, die sich in einer Längsrichtung L und orthogonal dazu in einer Umfangsrichtung U erstreckt. Vorliegend erstreckt sich die Platte 1a in Längsrichtung im Vergleich zur Umfangsrichtung etwa um das Drei- bis Vierfache. Die flächige Erstreckung in Längsrichtung L und Umfangsrichtung U der Platte 1a ist dabei um ein Vielfaches größer als die sich orthogonal dazu erstreckende Dicke der Platte 1a.

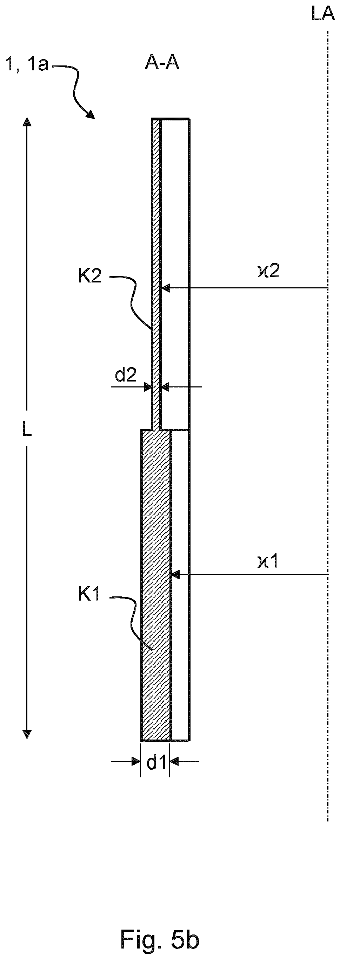

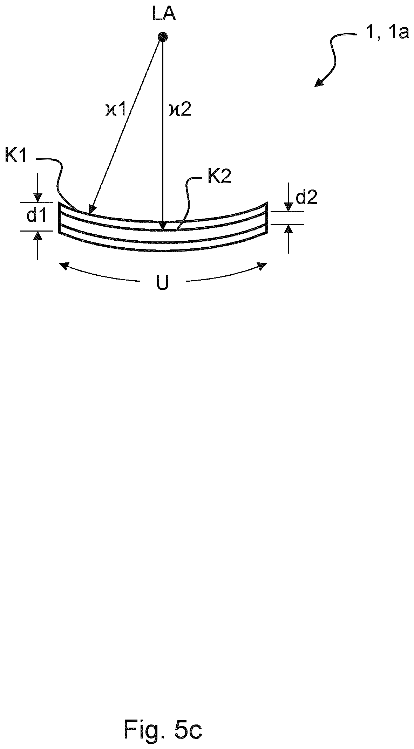

Durch das Walzen S2 der bereitgestellten Platte 1a wird in dessen Längsrichtung entlang einer Längsachse LA ein Dickenprofil mit variierender Dicke dÜ eingebracht. Dabei ist beispielshaft vorgesehen, ein Dickenprofil einzubringen, das einen ersten Konstantabschnitt K1 mit einer ersten Dicke d1 und einen zweiten Konstantabschnitt K2 mit einer zweiten Dicke d2 aufweist. Das in den Figuren 5a-6 gezeigte Turmsegment 1 weist ein variierendes Dickenprofil mit einem diskreten Verlauf der Dicke auf; das Dickenprofil des ersten Konstantabschnitts K1 mit der Dicke d1 geht sprunghaft bzw. stufenförmig in das Dickenprofil des zweiten Konstantabschnitts K2 mit der Dicke d2 über. Der zweite Konstantabschnitt K2 wurde auf eine Dicke d2 gewalzt, die etwa einem Drittel der ersten Dicke d1 des ersten Konstantabschnitts K1 entspricht. Die unterschiedlichen Dicken d1, d2 der beiden Konstantabschnitte K1, K2 sind insbesondere den Figuren 5b und 5c zu entnehmen.

Der zweite Konstantabschnitt K2 wurde dabei derart eingebracht, dass der zweite Konstantabschnitt K2 in Längsrichtung L oberhalb zum ersten Konstantabschnitt K1 angeordnet ist. Insbesondere sind die beiden Konstantabschnitte im Wesentlichen parallel zueinander angeordnet. Bei im Wesentlichen parallel angeordneten Konstantabschnitten K1, K2 erstreckt sich der Übergang zwischen den beiden Konstantabschnitten K1, K2 über die Umfangsrichtung U senkrecht dazu. Die eingebrachten Konstantabschnitte K1, K2 weisen dabei eine Erstreckung in Längsrichtung L bzw. eine Länge auf, die größer ist als deren Erstreckung in Umfangsrichtung U.

Im vorliegenden Beispiel umfasst das Walzen S2 der bereitgestellten Platte 1a zunächst das Aufwärmen S2.1 der Platte auf eine Warmwalztemperatur. Hierdurch lassen sich anschließend die Konstantabschnitte K1, K2 mit den jeweils in Längsrichtung L und in Umfangsrichtung U im Wesentlichen konstanten Dicken d1, d2 je Konstantabschnitt K1, K2 mit einem geringeren Kraftaufwand einbringen S2.2.

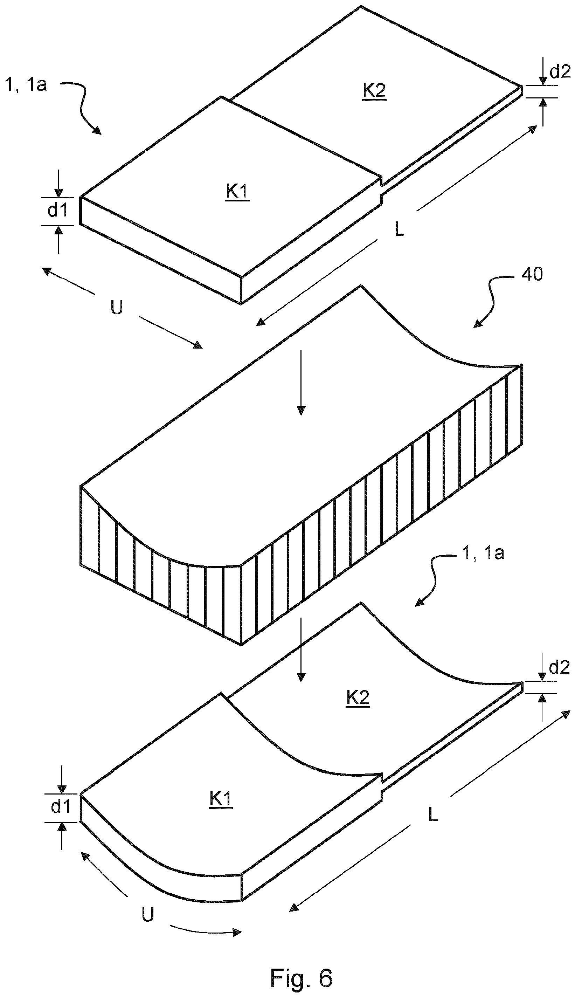

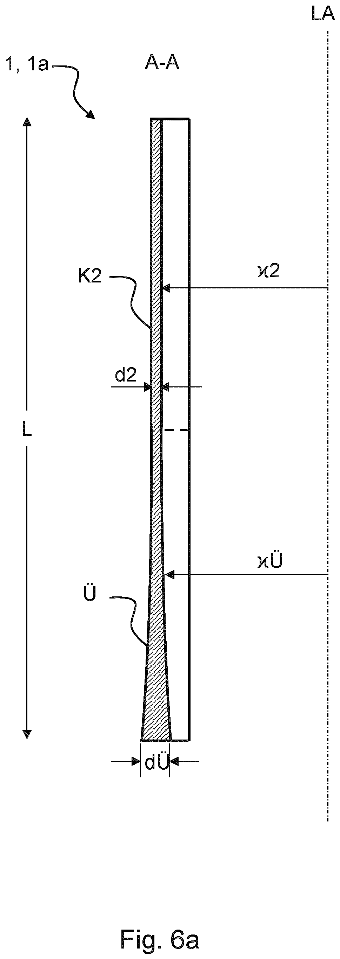

Im Anschluss an das Walzen S2 ist das Biegen S3 der gewalzten Platte 1a vorgesehen. Figur 6 zeigt eine schematische dreidimensionale Ansicht des in den Figuren 5a-5c gezeigten Turmsegments 1 vor und nach dem Verfahrensschritt Biegen S3 sowie eine schematische dreidimensionale Ansicht einer Form 40 zum Biegen S3 des Turmsegments 1. Ein entsprechendes Biegewerkzeug als Gegenstück zur Form 40 ist nicht gezeigt.

Figur 5b zeigt hierbei einen Querschnitt A-A in Längsrichtung quer zur Umfangsrichtung des in Figur 5a gezeigten Turmsegments 1. Ausgehend von einem unteren Ende des Turmsegments 1 erstreckt sich bis etwa zu dessen Mitte der erste Konstantabschnitt K1 mit einer Dicke d1 und ausgehend von etwa der Mitte des Turmsegments 1 bis zu einem oberen Ende der zweite Konstantabschnitt K2 mit einer Dicke d2. Diese Ansicht und die Draufsicht auf das Turmsegment 1 in Figur 5c zeigen die Krümmung x1, x2 in Umfangsrichtung der beiden Konstantabschnitte K1, K2 des Turmsegments 1. Aus der Schnittansicht A-A und der Draufsicht der Figuren 5b und 5c wird deutlich, dass die jeweiligen Konstantabschnitte K1, K2 des vorliegenden Turmsegments 1 zylinderförmig gebogen wurden. Im Einbauzustand bzw. Betriebszustand des Turmsegments 1 weist die Platte 1a in Bezug auf eine Längsachse LA in Abhängigkeit des jeweiligen Konstantabschnitts eine in Umfangsrichtung konstante Krümmung auf. In dem die Konstantabschnitte im Wesentlichen zylinderförmig gebogen sind, weisen die Konstantabschnitte K1, K2 in Längsrichtung im Einbauzustand bzw. Betriebszustand keine Krümmung auf.

Im vorliegenden Beispiel umfasst das Biegen S3 zunächst das Aufwärmen S3.1 der Platte 1a auf die Warmbiegetemperatur. Dadurch lässt sich die Platte 1a in der Folge mit einem geringeren Kraftaufwand in Umfangsrichtung U biegen S3.2. Durch dieses Warmverformen erhält die Platte einen Radius bzw. eine in Umfangsrichtung U konstante Krümmung x1, x2, wie dies die Figuren 5b, 5c und 6 (unteres Drittel) zeigen S3.3.

Für eine weitere in Figur 6a gezeigten Ausführungsform eines Turmsegments 1 wird in dem Verfahrensschritt des Walzens S2 in Längsrichtung L des Turmsegments ein Übergangsabschnitt Ü und im Einbauzustand in Längsrichtung oberhalb ein Konstantabschnitt K2 in die Platte 1a eingebracht. In dieser bevorzugten Ausführungsform des Fertigungsverfahrens und des hergestellten Turmsegments 1 geht das Dickenprofil des Übergangsabschnitts Ü kontinuierlich in das Dickenprofil des Konstantabschnitts K2 über. Das Dickenprofil des Übergangsabschnitts Ü weist eine variierende Dicke dÜ auf. Das Dickenprofil des Turmsegments 1 folgt im Übergangsabschnitt Ü einem konkaven Verlauf. Die Dicke des Übergangsabschnitts nimmt kontinuierlich bis zu einem oberen Ende der Übergangsabschnitts Ü bzw. etwa bis zur Mitte des Turmsegments 1 auf eine Dicke d2 ab und geht kontinuierlich in den Konstantabschnitt K2 mit der konstanten Dicke d2 über. Der kontinuierliche Übergang zwischen dem Übergangsabschnitt Ü und dem Konstantabschnitt K2 ist durch die horizontale gestrichelte Linie in Figur 6a angedeutet. Der Übergangsabschnitt weist eine im Umfangsrichtung konstante Krümmung auf, die in Längsrichtung des Turmsegments 1 variiert. Die in Figur 6a gezeigte bevorzugte Ausführungsform eines Turmsegments 1 ist im Wesentlichen analog zu der in den Figuren 5a-6 gezeigten bevorzugten Ausführungsform des Turmsegments mit den beiden Konstantabschnitten hergestellt. Insoweit gelten die Ausführungen zu dem Fertigungsverfahren der in Figuren 5a-6 gezeigten Turmsegmente im Wesentlichen analog für die in Figur 6a dargestellte bevorzugte Ausführungsform eines Turmsegments.

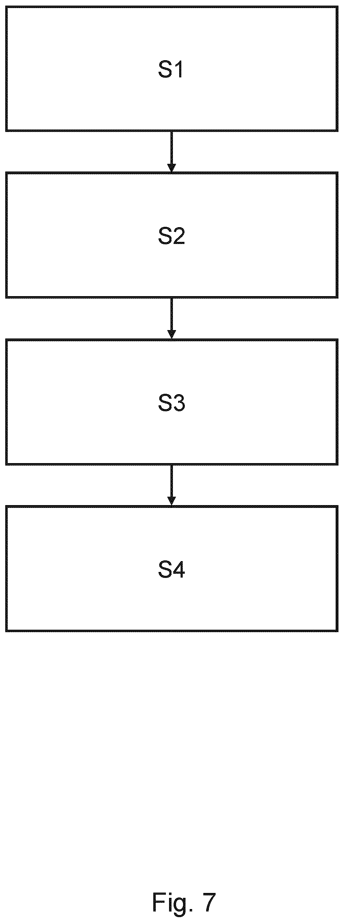

Basierend auf dem in Figur 2 dargestellten Fertigungsverfahren zum Erzeugen eines Turmsegments 1 eines Turms 102 umfasst das in Figur 7 dargestellte Fertigungsverfahren ergänzend den Schritt des Erzeugens S4 mindestens einer Stoßfläche an der Platte 1a.

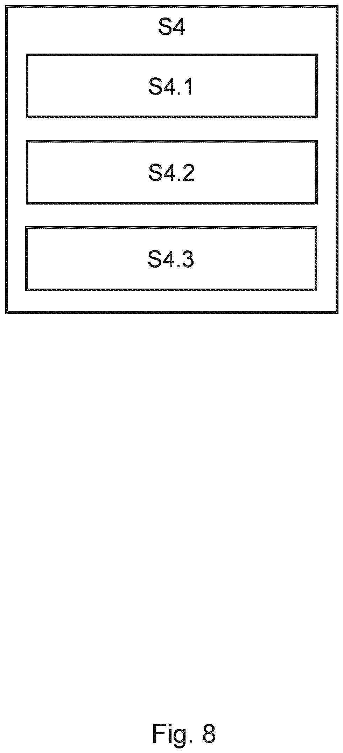

Figur 8 zeigt ein schematisches Blockdiagramm mit exemplarischen Verfahrensschritten des Erzeugens S4 mindestens einer Stoßfläche, beispielsweise das Erzeugen S4.1, S4.2 mindestens einer Längsstoßfläche 3a, 3b und/oder mindestens einer Umfangsstoßfläche 2a, 2b zum Verbinden mindestens einer weiteren Platte, und/oder das Erzeugen einer Stoßfläche das Entfernen eines Randabschnitts S4.3. Gemäß dem in Figur 7 gezeigten Fertigungsverfahren ist ferner vorgesehen, dass das Walzen S2 ergänzend ein Einbringen S2.3 eines Übergangsabschnitts Ü zwischen zwei Konstantabschnitten umfasst.

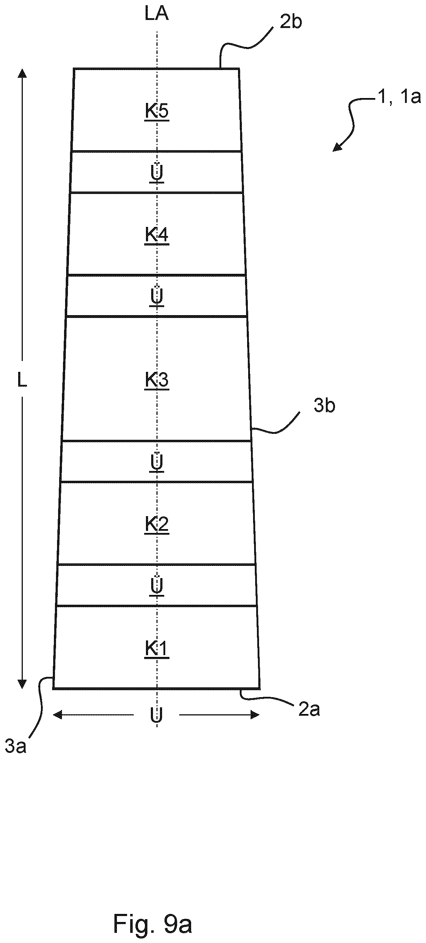

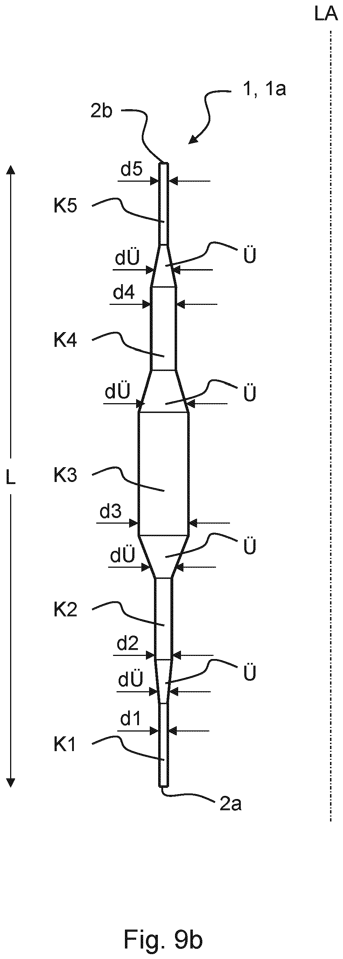

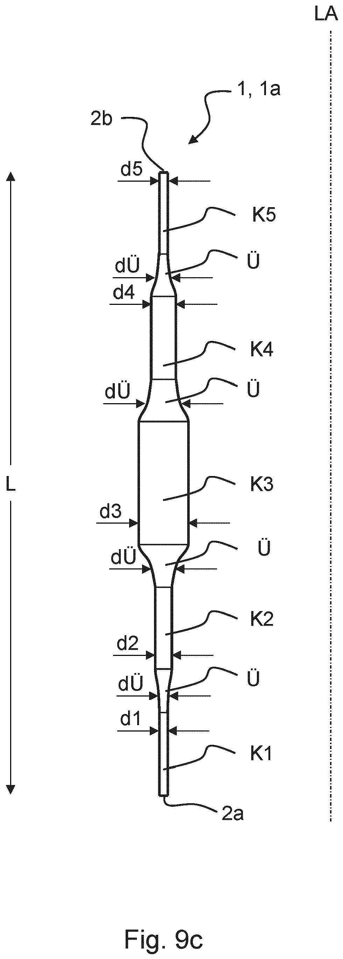

Ein mit einem solchen Fertigungsverfahren erzeugtes Turmsegments 1 zeigen die Figuren 9a, 9b und 9c. Ein mit einem solchen Verfahren erzeugtes Turmsegment 1 weist beispielsweise in Längsrichtung fünf parallel zueinander im Einbauzustand in Längsrichtung oberhalb voneinander angeordnete Konstantabschnitte K1, K2, K3, K4, K5 mit jeweiligen konstanten Dicken d1, d2, d3, d4, d5 auf. Zwischen diesen Konstantabschnitten K1 bis K5 wurden für eine geringere Kerbwirkung Übergangsabschnitte Ü parallel dazu eingebracht. Es kann bevorzugt sein, dass ein Turmsegment 1 an einem im Einbauzustand unteren und/oder oberen Ende mit einem Übergangsabschnitt Ü endet. In den Figuren 9a, 9b und 9c dargestellten bevorzugten Ausführungsformen eines Turmsegments 1 weisen die jeweiligen parallel zueinander angeordneten Konstantabschnitte K1, K2, K3, K4, K5 eine Erstreckung in Längsrichtung L auf, die größer ist als die Erstreckung der Übergangsabschnitte Ü in Längsrichtung L. In weiteren bevorzugten Ausführungsformen kann es bevorzugt sein, dass ein oder mehrere Übergangsabschnitte Ü eine in Längsrichtung L größere Erstreckung aufweisen als ein oder mehrere Konstantabschnitte eines Turmsegments 1.

Das in Figur 9b dargestellte Turmsegment 1 zeigt ein Dickenprofil, bei dem die Dicke dÜ des jeweiligen Übergangsabschnitts Ü zwischen den benachbarten Konstantabschnitten K1, K2, K3, K4, K5 trapezförmig variiert. Insbesondere variiert das Dickenprofil innerhalb der einzelnen Übergangsabschnitte kontinuierlich. Das in Figur 9b dargestellte Dickenprofil des Turmsegments weist an den Übergängen zwischen den einzelnen Abschnitten einen diskreten Verlauf auf. Figur 9c zeigt ein Dickenprofil eines Turmsegments 1, beispielsweise gemäß Figur 9a, bei dem die Dicke dÜ der jeweiligen Übergangsabschnitte Ü zwischen den benachbarten Konstantabschnitten K1, K2, K3, K4, K5 konkav und konvex verlaufen. Insbesondere variiert das Dickenprofil innerhalb der einzelnen Übergangsabschnitte Ü kontinuierlich. Das in Figur 9b dargestellte Dickenprofil des Turmsegments 1 weist an den Übergängen zwischen den einzelnen Abschnitten einen kontinuierlichen Verlauf auf. Die in den Figuren 9b und 9c gezeigten Dickenprofile, weisen in Längsrichtung L in Bezug auf den Einbauzustand bzw. Betriebszustand des Turmsegments 1, ausgehend von einem unteren Ende des Turmsegments 1 über Konstantabschnitt K2 bis hin zur Mitte des Turmsegments 1, also Konstantabschnitt K3, eine zunehmende Dicke auf. Die Dicke des Dickenprofils nimmt dann ausgehend von Konstantabschnitt K3 über Konstantabschnitt K4 zu Konstantabschnitt K5, dem oberen Ende des Turmsegments 1, ab.

Im vorliegenden Beispiel umfasst das Erzeugen S4 mindestens einer Stoßfläche das Erzeugen S4.1, S4.2 einer oberen und unteren Umfangsstoßfläche 2a, 2b und zweier Längsstoßflächen 3a, 3b. Die Umfangsstoßflächen 2a, 2b erstrecken sich in Umfangsrichtung U im Wesentlichen an der Unterseite und Oberseite des Turmsegments 1. Die Längsstoßflächen 3a, 3b erstrecken sich im Wesentlichen in Längsrichtung L, seitlich am Turmsegment 1. Ferner umfasst das Erzeugen einer Stoßfläche das Entfernen eines Randabschnitts S4.3. Durch das Entfernen des Randabschnitts S4.3 verläuft das in Figur 9a gezeigte Turmsegment 1 in Längsrichtung L konisch zu. Insbesondere weist das dadurch erzeugte Turmsegment 1 in Längsrichtung ausgehend von einem unteren Ende, der Umfangsstoßfläche 2a, zu einem oberen Ende, der Umfangsstoßfläche 2b, eine Verjüngung auf. Das Turmsegment 1 weist insbesondere geneigte Längsstoßflächen 3a, 3b auf. Ein solches Turmsegment 1 wird im Einbauzustand bzw. Betriebszustand geneigt zu einer im Wesentlichen vertikal ausgerichteten Längsachse LA angeordnet.

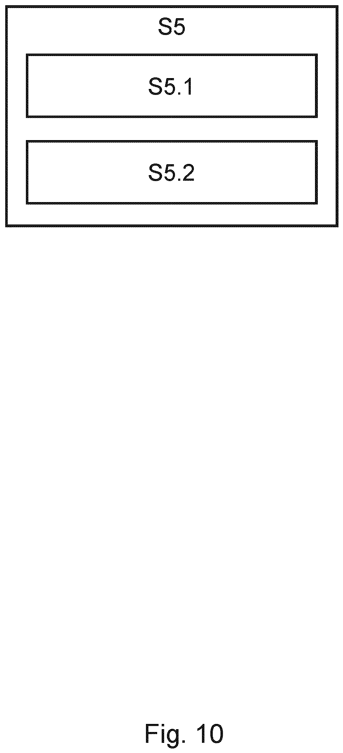

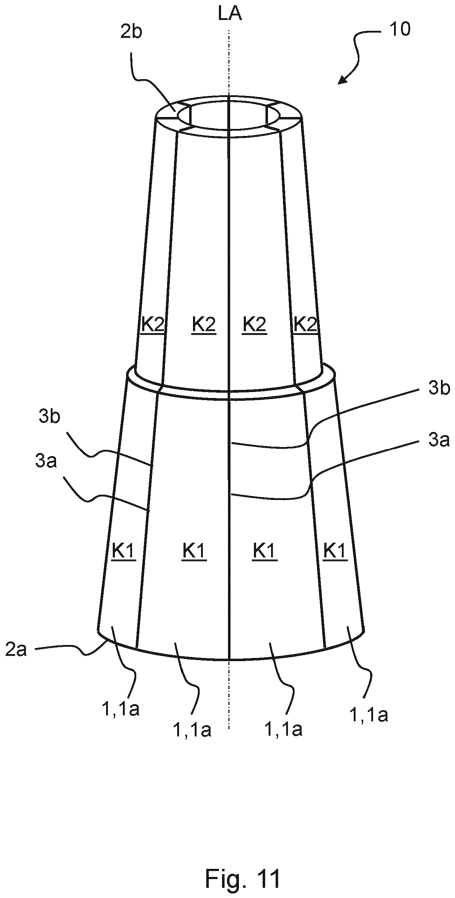

Figur 10 zeigt ein Fertigungsverfahren zum Herstellen eines Turmabschnitts 10. Hierzu ist es vorgesehen, beispielsweise die wie zuvor beschrieben hergestellten Platten 1a an den Längsstoßflächen 3a, 3b miteinander zu verbinden S5. Einen mit diesem Verfahren hergestellten Turmabschnitt 10 zeigt Figur 11. Ein Turm 102 einer Windenergieanlage 100 gemäß Figur 1 kann beispielsweise einen derart hergestellten Turmabschnitt 10 umfassen.

Hierzu wurden Turmsegmente gemäß dem nach Figur 2 beschriebenen Fertigungsverfahren erzeugt und ergänzend Randabschnitte der Platten 1a entfernt und Umfangsstoßflächen 2a, 2b an der Ober- und Unterseite der Platte 1a sowie Längsstoßflächen 3a, 3b in Längsrichtung der Platte 1a erzeugt S4. Zum Herstellen des Turmabschnitts 10 wurden acht Turmsegmente 1 bereitgestellt und zueinander ringförmig angeordnet und fixiert S5.1. Anschließend wurde zum Verbinden der Platten 1a miteinander eine Längs-Schweißverbindung zwischen benachbarten Platten 1a entlang der Längsstoßflächen 3a, 3b im Wesentlichen parallel zur Längsachse LA hergestellt.

In dem vorliegend dargestellten Ausführungsbeispiel wurde ein Turmabschnitt 10 hergestellt, bei dem die Konstantabschnitte K1 benachbarter Turmsegmente 1 und die Konstantabschnitte K2 benachbarter Turmsegmente 1 im Wesentlichen dieselbe konstanten Dicken d1, d2 aufweisen. Es ist aber denkbar, die Konstantabschnitte K1, K2 solcher Turmsegmente, die im Einbauzustand bzw. Betriebszustand im Wesentlichen parallel zu einer Hauptbelastungsrichtung angeordnet sind mit einer vergleichsweise geringeren Dicke d1, d2 zu erzeugen als die Konstantabschnitte K1, K2 solcher Turmsegmente, die im Einbauzustand bzw. Betriebszustand im Wesentlichen quer zu der Hauptbelastungsrichtung angeordnet sind.

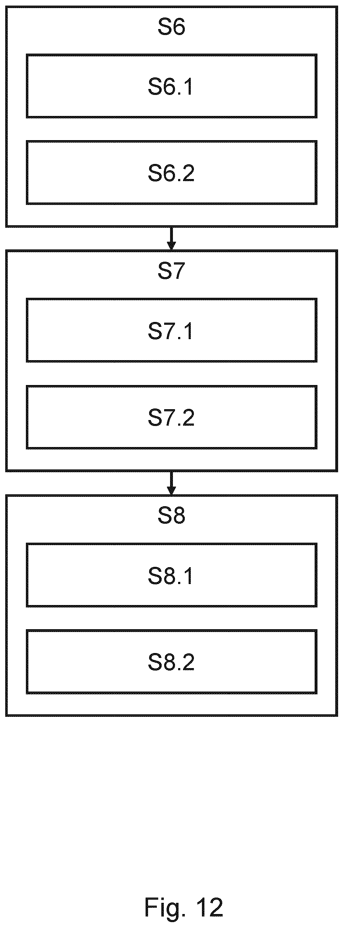

Figur 12 zeigt ein Fertigungsverfahren zum Herstellen einer Turmsektion 20. Hierzu ist es vorgesehen, zwei oder mehrere Turmabschnitte zu verbinden S7, Schweißverbindungen zu Schleifen S8 und/oder Platten im Bereich der Schweißverbindungen zu glühen S9. Das Verbinden S6 von zwei oder mehreren Turmabschnitten 10 umfasst das Anordnen und Fixieren S7.1 benachbarter Turmabschnitte 10 zueinander entlang einer Umfangsstoßfläche und das Herstellen S7.2 einer Umfangs-Schweißverbindung. Das Schleifen S8 umfasst das Schleifen der Umfangs-Schweißverbindung S8.1 und/oder das Schleifen der Längs-Schweißverbindung S8.2. Das Glühen S9 umfasst das Glühen der Platten im Bereich der Umfangs-Schweißverbindung S9.1 und/oder Glühen der Längs-Schweißverbindung S9.2.

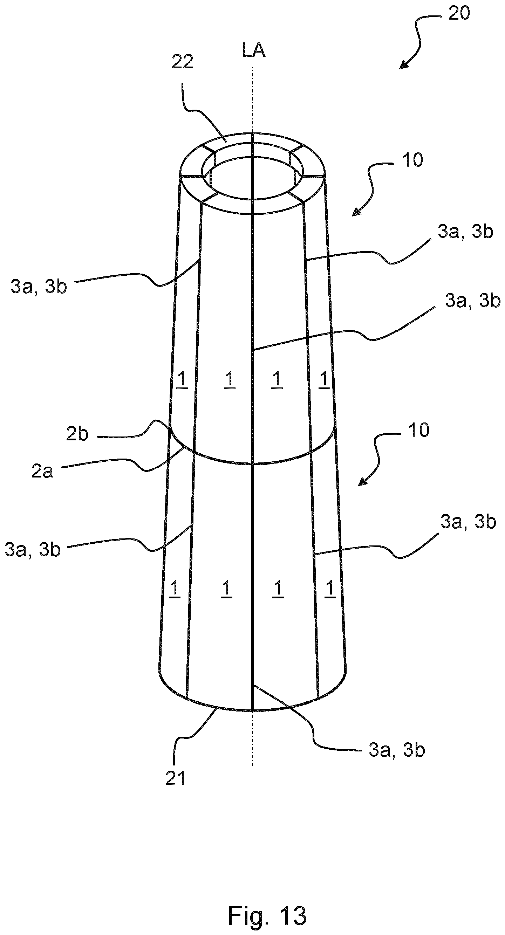

Figur 13 zeigt eine basierend auf dem in Figur 12 dargestellten Fertigungsverfahren hergestellte Turmsektion 20. Ein Turm 102 einer Windenergieanlage 100 gemäß Figur 1 kann beispielsweise eine derart hergestellte Turmsektion 20 umfassen. Es kann bevorzugt sein, dass ein/e zuvor beschriebene/r Turmabschnitt, und/oder Turmsektion und/oder Turm von dem erfindungsgemäßen Fertigungsverfahren verschiedene Turmsegmente umfasst.

Die Herstellung einer solchen Turmsektion 20 umfasst im vorliegenden Beispiel das Bereitstellen zweier wie zuvor beschrieben hergestellter Turmabschnitte 10. Zum Verbinden S6 dieser zwei Turmabschnitte 10 ist vorgesehen, die beiden Turmabschnitte 10 entlang der Umfangsstoßflächen 2a, 2b zu einer Turmsektion 20 in Längsrichtung anzuordnen und zu fixieren S6.1 und anschließend zwischen den benachbarten Turmabschnitten 10 entlang der Umfangsstoßflächen 2a, 2b eine Umfangs-Schweißverbindung herzustellen S6.2. Für eine längere Lebensdauer werden die Umfangs-Schweißverbindungen geschliffen S7.1 und geglüht S8.1. Ferner ist vorgesehen, dass die Turmsektion 20 an ihrem unteren Ende und ihrem oberen Ende einen unteren und oberen Ringflansch 21, 22 aufweist. Der obere Ringflansch ist zur Befestigung einer weiteren Turmsektion 20 oder einer Gondel 104 vorgesehen und der untere Ringflansch ist zur Befestigung einer weiteren Turmsektion 20 oder eines Fundaments vorgesehen. Vorzugsweise sind der obere und untere Ringflansch 21, 22 als Schraubverbindung ausgebildet.

### BEZUGSZEICHENLISTE

1 Turmsegment
1a Platte
2a, 2b Umfangsstoßfläche
3a, 3b Längsstoßfläche
10 Turmabschnitt
20 Turmsektion
40 Form, Gitterform
100 Windenergieanlage
102 Turm
104 Gondel
106 Rotor
108 Rotorblatt
110 Spinner
d1...d5 konstante Dicke eines Konstantabschnitts
dÜ variierende Dicke eines Übergangsabschnitts
K1...K5 Konstantabschnitt
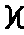 1, 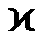 2 Krümmung eines Konstant- und/oder Übergangsabschnitts Abschnitte
L Längsrichtung
LA Längsachse
U Umfangsrichtung
Ü Übergangsabschnitt

## Patentansprüche

1. Fertigungsverfahren zum Erzeugen eines Turmsegments (1) eines sich verjüngenden Turms (102) einer Windenergieanlage (100), wobei der Turm im Einbauzustand und im Betriebszustand eine vertikale Längsachse und einen ringförmigen Querschnitt orthogonal zu dieser Längsachse aufweist, mit den Schritten:
- Bereitstellen (S1) einer Platte (1a), das sich in einer Längsrichtung (L) und orthogonal dazu in einer Umfangsrichtung (U) erstreckt, wobei die Erstreckung in Längsrichtung (L) größer ist als die Erstreckung in Umfangsrichtung (U); und
- Walzen (S2) der Platte (1a) entlang der Längsrichtung (L) der Platte (1a), wobei das Walzen umfasst:
Einbringen eines Dickenprofils mit variierender Dicke (dÜ); und
- Biegen (S3) der Platte (1a) in Umfangsrichtung (U); und
- Erzeugen (S4) mindestens einer Stoßfläche an der Platte (1a) zum Verbinden von mindestens einer weiteren Platte (1a), wobei das Erzeugen der mindestens einen Stoßfläche umfasst:
Erzeugen (S4.1) mindestens einer Längsstoßfläche (3a, 3b) zum Verbinden mindestens einer weiteren Platte (1a) in Umfangsrichtung (U); und
Entfernen (S4.3) eines Randabschnitts der Platte (1a) zum Einstellen oder Erzielen einer geforderten Neigung des Turms, so dass ein im Einbauzustand gegenüber der Längsachse geneigtes Turmsegment in Längsrichtung eine variierende Krümmung aufweist.

2. Fertigungsverfahren nach Anspruch 1, wobei das Walzen (S2) umfasst:
- Aufwärmen (S2.1) der Platte auf eine Warmwalztemperatur; und/oder
- Einbringen (S2.2) von mindestens einem Übergangsabschnitt (Ü), wobei der Übergangsabschnitt (Ü) eine variierende Dicke (dÜ) des eingebrachten Dickenprofils aufweist; und/oder
- Einbringen (S2.3) von mindestens einem Konstantabschnitt (K1, K2, K3, K4, K5), wobei der Konstantabschnitt (K1, K2, K3, K4, K5) eine konstante Dicke (d1, d2, d3, d4, d5) des eingebrachten Dickenprofils aufweist.

3. Fertigungsverfahren nach einem der vorhergehenden Ansprüche, wobei das Biegen umfasst:
- Aufwärmen (S3.1) der Platte (1a) auf eine Warmbiegetemperatur; und/oder
- Einbringen (S3.2) einer Krümmung ( 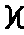 1, 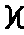 2) in Umfangsrichtung (U) in die Platte (1a), wobei das Einbringen der Krümmung (x1, x2)
vorzugsweise ein Einbringen der Krümmung ( 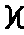 1, 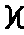 2) mittels plastischem Warmverformen und/oder
vorzugsweise ein Einbringen einer in Umfangsrichtung (U) der Platte (1a) konstanten Krümmung ( 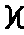 1, 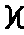 2) umfasst; und/oder
- Aufeinander Anordnen (S3.3) von mindestens zwei Platten (1a) im Wesentlichen orthogonal zur Längsrichtung (L) und Umfangsrichtung (U) der Platte (1a); und/oder
- Anordnen (S3.4) der Platte (1a) an einer Form (40).

4. Fertigungsverfahren nach einem der vorhergehenden Ansprüche,
- wobei die Dicke (dÜ) des mindestens einen Übergangsabschnitts (Ü) stufenlos oder abgestuft variiert, und/oder
- wobei die in Umfangsrichtung (U) eingebrachte Krümmung ( 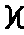 1, 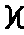 2) entlang der Längsrichtung (L) der Platte (1a) variiert.

5. Fertigungsverfahren nach einem der vorhergehenden Ansprüche, mit dem Schritt:
- Erzeugen (S4) mindestens einer Stoßfläche an der Platte (1a) zum Verbinden von mindestens einer weiteren Platte (1a), wobei das Erzeugen der mindestens einen Stoßfläche umfasst:
Erzeugen (S4.2) mindestens einer Umfangsstoßfläche (2a, 2b) zum Verbinden mindestens einer weiteren Platte (1a) in Längsrichtung (L).

6. Fertigungsverfahren zur Herstellung eines Turmabschnitts (10), mit dem Schritt:
- Verbinden (S5) zweier Platten (1a) erzeugt nach einem Fertigungsverfahren nach einem der vorhergehenden Ansprüche an den entsprechenden Längsstoßflächen (3a, 3b), wobei das Verbinden (S5) umfasst:
Anordnen und Fixieren (S5.1) benachbarter Platten (1a) zueinander entlang der Längsstoßflächen (3a, 3b) zu einem ringförmigen Turmabschnitt (10) in Umfangsrichtung (U); und
Herstellen (S5.2) einer Längs-Schweißverbindung zwischen den benachbarten Platten (1a) entlang der Längsstoßflächen (3a, 3b).

7. Fertigungsverfahren zur Herstellung einer Turmsektion (20), mit dem Schritt:
- Verbinden (S6) von zwei oder mehreren Turmabschnitten (10) erzeugt nach einem Fertigungsverfahren nach dem vorhergehenden Anspruch an den entsprechenden Umfangsstoßflächen (2a, 2b), wobei das Verbinden (S6) umfasst:
Anordnen und Fixieren (S6.1) benachbarter Turmabschnitte (10) zueinander entlang der Umfangsstoßflächen (2a, 2b) zu einer Turmsektion (20) in Längsrichtung (L); und
Herstellen (S6.2) einer Umfangs-Schweißverbindung zwischen den benachbarten Turmabschnitten (10) entlang der Umfangsstoßflächen (2a, 2b).

8. Fertigungsverfahren nach einem der vorhergehenden Ansprüche 6-7, mit dem Schritt:
- Schleifen (S7.1) der Umfangs-Schweißverbindung und/oder Schleifen (S7.2) der Längs-Schweißverbindung, und/oder
- Glühen (S8.1) der Platten im Bereich der Umfangs-Schweißverbindung und/oder Glühen (S8.2) der Längs-Schweißverbindung.

9. Turmsegment (1) eines sich verjüngenden Turms (102), insbesondere eines sich verjüngenden Turms (102) einer Windenergieanlage (100), umfassend eine Platte (1a), wobei sich die Platte (1a) in einer Längsrichtung (L) und orthogonal dazu in einer Umfangsrichtung (U) erstreckt, wobei die Erstreckung in Längsrichtung (L) größer ist als die Erstreckung in Umfangsrichtung (U), und wobei die Platte (1a) ein Dickenprofil mit einer variierenden Dicke entlang der Längsrichtung (L) der Platte (1a) aufweist, mit
- mindestens einen Übergangsabschnitt (Ü) mit einer variierenden Dicke (dÜ); und/oder
- mindestens einen Konstantabschnitt (K1, K2, K3, K4, K5) mit einer im Wesentlichen konstanten Dicke (d1, d2, d3, d4, d5),
**dadurch gekennzeichnet, dass**
die in Umfangsrichtung (U) eingebrachte Krümmung ( 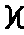 1, 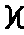 2) entlang der Längsrichtung (L) der Platte (1a) im Einbauzustand variiert zum Einstellen oder Erzielen einer geforderten Neigung des Turms.

10. Turmabschnitt (10) eines Turms (102), insbesondere eines Turms (102) einer Windenergieanlage (100), umfassend zwei, drei oder mehrere Turmsegmente (1) nach Anspruch 9, wobei
- die Turmsegmente (1) in Umfangsrichtung (U) ringförmig oder als ringförmiger Teilabschnitt angeordnet und benachbarte Turmsegmente (1) an den Längsstoßflächen (3a, 3b) miteinander befestigt sind.

11. Turmabschnitt (10) nach dem vorhergehenden Anspruch, wobei im Einbauzustand die Dicke des Turmabschnitts in Umfangsrichtung (U), insbesondere zwischen mindestens zwei Turmsegmenten (1), verschieden ist.

12. Turmsektion (20) eines Turms (102), insbesondere eines Turms (102) einer Windenergieanlage (100), umfassend zwei, drei oder mehrere Turmabschnitte (10) nach einem der vorhergehenden Ansprüche 10-11, wobei die Turmabschnitte (10) im Einbauzustand in Längsrichtung (L) aufeinander angeordnet und benachbarte Turmabschnitte (10) an den Umfangsstoßflächen (2a, 2b) miteinander befestigt sind.

13. Turmsektion (20) nach dem vorhergehenden Anspruch, wobei die Turmsektion (20)
- an einem in Längsrichtung (L) im Einbauzustand oberen Ende einen oberen Ringflansch (22) zur Befestigung einer weiteren Turmsektion oder Gondel (104) aufweist, und/oder
- an einem in Längsrichtung (L) im Einbauzustand unteren Ende einen unteren Ringflansch (21) zur Befestigung einer weiteren Turmsektion (20) oder eines Fundaments aufweist.

14. Turm (102), umfassend eine Turmsektion (20) nach einem der vorhergehenden Ansprüche 12-13.

15. Windenergieanlage (100), umfassend einen Turm (102) nach dem vorhergehenden Anspruch.

16. Verwendung eines Turmsegments nach Anspruch 9 und/oder eines Turmabschnitts nach einem der vorhergehenden Ansprüche 10-11 und/oder einer Turmsektion nach einem der vorhergehenden Ansprüche 12-13 für einen Turm, insbesondere für einen Turm für eine Windenergieanlage.

## Claims

1. A manufacturing method for producing a tower segment (1) of a tapering tower (102) of a wind power installation (100), wherein the tower in the installed state and in the operating state has a vertical longitudinal axis and an angular cross-section orthogonal to this longitudinal axis, said method comprising the steps:
- providing (S1) a plate (1a) that extends in a longitudinal direction (L) and, orthogonally thereto, in a circumferential direction (U), wherein the extent in the longitudinal direction (L) is larger than the extent in the circumferential direction (U); and
- rolling (S2) the plate (1a) along the longitudinal direction (L) of the plate (1a), wherein the rolling comprises:
incorporating a thickness profile having a variable thickness (dÜ); and
- bending (S3) the plate (1a) in the circumferential direction (U); and
- producing (S4) at least one abutting face on the plate (1a) for connecting at least one further plate (1a), wherein the producing of the at least one abutting face comprises:
producing (S4.1) at least one longitudinal abutting face (3a, 3b) for connecting at least one further plate (1a) in the circumferential direction (U), and
removing (S4.3) a peripheral portion of the plate (1a) for adjusting or
achieving a required inclination of the tower, so that a tower segment inclined relative to the longitudinal axis in the installed state has a varying curvature in the longitudinal direction.

2. The manufacturing method as claimed in claim 1, wherein the rolling (S2) comprises:
- heating (S2.1) the plate to a hot-rolling temperature; and/or
- incorporating (S2.2) at least one transition portion (Ü), wherein the transition portion (Ü) has a variable thickness (dÜ) of the incorporated thickness profile; and/or
- incorporating (S2.3) at least one constant portion (K1, K2, K3, K4, K5), wherein the constant portion (K1, K2, K3, K4, K5) has a constant thickness (d1, d2, d3, d4, d5) of the incorporated thickness profile.

3. The manufacturing method as claimed in one of the preceding claims, wherein the bending comprises:
- heating (S3.1) the plate (1a) to a hot-bending temperature; and/or
- incorporating (S3.2) a curvature ( 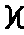 1, 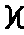 2) in the circumferential direction (U) in the plate (1a), wherein the incorporating of the curvature ( 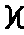 1, 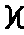 2) preferably comprises
incorporating the curvature ( 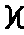 1, 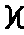 2) by means of plastic hot-forming; and/or
incorporating a curvature ( 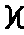 1, 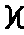 2) which is constant in the circumferential direction (U) of the plate (1a); and/or
- disposing on top of one another (S3.3) at least two plates (1a) substantially orthogonal to the longitudinal direction (L) and the circumferential direction (U) of the plate (1a); and/or
- disposing (S3.4) the plate (1a) on a mold (40).

4. The manufacturing method as claimed in one of the preceding claims,
- wherein the thickness (dÜ) of the at least one transition portion (Ü) varies in a stepless or stepped manner; and/or
- wherein the curvature ( 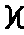 1, 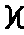 2) incorporated in the circumferential direction (U) varies along the longitudinal direction (L) of the plate (1a).

5. The manufacturing method as claimed in one of the preceding claims, comprising the step:
- producing (S4) at least one abutting face on the plate (1a) for connecting at least one further plate (1a), wherein the producing of the at least one abutting face comprises:
producing (S4.2) at least one circumferential abutting face (2a, 2b) for connecting at least one further plate (1a) in the longitudinal direction (L).

6. A manufacturing method for establishing a tower portion (10), comprising the step:
- connecting (S5) two plates (1a) produced according to a manufacturing method as claimed in one of the preceding claims at the corresponding longitudinal abutting faces (3a, 3b), wherein the connecting (S5) comprises:
disposing and fixing (S5.1) adjacent plates (1a) on one another along the longitudinal abutting faces (3a, 3b) so as to form an annular tower portion (10) in the circumferential direction (U); and
establishing (S5.2) a longitudinal welded connection between the adjacent plates (1a) along the longitudinal abutting faces (3a, 3b).

7. A manufacturing method for establishing a tower section (20), comprising the step:
- connecting (S6) two or a plurality of tower portions (10) produced according to a manufacturing method as claimed in the preceding claim at the corresponding circumferential abutting faces (2a, 2b), wherein the connecting (S6) comprises:
disposing and fixing (S6.1) adjacent tower portions (10) on one another along the circumferential abutting faces (2a, 2b) so as to form a tower section (20) in the longitudinal direction (L); and
establishing (S6.2) a circumferential welded connection between the adjacent tower portions (10) along the circumferential abutting faces (2a, 2b).

8. The manufacturing method as claimed in one of preceding claims 6 to 7, comprising the step:
- grinding (S7.1) the circumferential welded connection and/or grinding (S7.2) the longitudinal welded connection; and/or
- annealing (S8.1) the plates in the region of the circumferential welded connection and/or annealing (S8.2) the longitudinal welded connection.

9. A tower segment (1) of a tapering tower (102), in particular of a tapering tower (102) of a wind power installation (100), comprising a plate (1a), wherein the plate (1a) extends in a longitudinal direction (L) and, orthogonally thereto, in a circumferential direction (U), wherein the extent in the longitudinal direction (L) is larger than the extent in the circumferential direction (U), and wherein the plate (1a) has a thickness profile having a variable thickness along the longitudinal direction (L) of the plate (1a), having
- at least one transition portion (Ü) having a variable thickness (dÜ); and/or
- at least one constant portion (K1, K2, K3, K4, K5) having a substantially constant thickness (d1, d2, d3, d4, d5),
**characterized in that**
- the curvature (m1, m2) introduced in the circumferential direction (U) varies along the longitudinal direction (L) of the plate (1a) in the installed state to adjust or achieve a required inclination of the tower.

10. A tower portion (10) of a tower (102), in particular of a tower (102) of a wind power installation (100), comprising two, three or a plurality of tower segments (1) as claimed in claim 9, wherein
- the tower segments (1) in the circumferential direction (U) are disposed in an annular manner or as an annular sub-portion, and adjacent tower segments (1) are fastened to one another at the longitudinal abutting faces (3a, 3b).

11. The tower portion (10) as claimed in the preceding claim, wherein the thickness of the tower portion in the installed state differs in the circumferential direction U, in particular between at least two tower segments (1).

12. A tower section (20) of a tower (102), in particular of a tower (102) of a wind power installation (100), comprising two, three or a plurality of tower portions (10) as claimed in one of preceding claims 10 to 11, wherein the tower portions (10), in the installed state, in the longitudinal direction (L) are disposed on top of one another, and adjacent tower portions (10) are fastened to one another at the circumferential abutting faces (2a, 2b).

13. The tower section (20) as claimed in the preceding claim, wherein the tower section (20)
- on an end which, in the installed state, in the longitudinal direction (L) is an upper end has an upper annular flange (22) for fastening a further tower section or a nacelle (104); and/or
- on an end which, in the installed state, in the longitudinal direction (L) is a lower end has a lower annular flange (21) for fastening a further tower section (20) or a foundation.

14. A tower (102) comprising a tower section (20) as claimed in one of preceding claims 12 to 13.

15. A wind power installation (100) comprising a tower (102) as claimed in the preceding claim.

16. The use of a tower segment as claimed in claim 9 and/or of a tower portion as claimed in one of preceding claims 10 to 11 and/or a tower section as claimed in one of preceding claims 12 to 13, for a tower, in particular for a tower for a wind power installation.

## Revendications

1. Procédé de fabrication pour produire un segment de tour (1) d'une tour (102) s'amincissant d'une éolienne (100), dans lequel la tour présente, à l'état monté et à l'état de fonctionnement, un axe longitudinal vertical et une section transversale annulaire orthogonale à cet axe longitudinal, avec les étapes de :
- fourniture (S1) d'une plaque (1a) qui s'étend dans une direction longitudinale (L) et orthogonalement à celle-ci dans une direction circonférentielle (U), dans lequel l'extension dans la direction longitudinale (L) est supérieure à l'extension dans la direction circonférentielle (U) ; et
- laminage (S2) de la plaque (1a) le long de la direction longitudinale (L) de la plaque (1a), dans lequel le laminage comprend :
l'insertion d'un profil d'épaisseur avec une épaisseur variable (dÜ) ; et
- le pliage (S3) de la plaque (1a) dans la direction circonférentielle (U) ; et
- la production (S4) d'au moins une surface de jonction sur la plaque (1a) pour relier au moins une autre plaque (1a), dans lequel la production de l'au moins une surface de jonction comprend :
la production (S4.1) d'au moins une surface de jonction longitudinale (3a, 3b) pour relier au moins une autre plaque (1a) dans la direction circonférentielle (U) ; et
le retrait (S4.3) d'une partie de bord de la plaque (1a) pour régler ou obtenir une inclinaison requise de la tour, de sorte qu'un segment de tour incliné par rapport à l'axe longitudinal à l'état monté dans la direction longitudinale présente une courbure variable.

2. Procédé de fabrication selon la revendication 1, dans lequel le laminage (S2) comprend :
- le chauffage (S2.1) de la plaque à une température de laminage à chaud ; et/ou
- l'insertion (S2.2) d'au moins une partie de transition (Ü), dans lequel la partie de transition (Ü) présente une épaisseur variable (dÜ) du profil d'épaisseur inséré ; et/ou
- l'insertion (S2.3) d'au moins une partie constante (K1, K2, K3, K4, K5), dans lequel la partie constante (K1, K2, K3, K4, K5) présente une épaisseur constante (d1, d2, d3, d4, d5) du profil d'épaisseur inséré.

3. Procédé de fabrication selon l'une quelconque des revendications précédentes, dans lequel le pliage comprend :
- le chauffage (S3.1) de la plaque (1a) à une température de pliage à chaud ; et/ou
- l'insertion (S3.2) d'une courbure ( 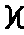 1, 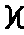 2) dans la direction circonférentielle (U) dans la plaque (1a), dans lequel l'insertion de la courbure ( 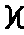 1, 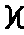 2)
comprend de préférence une insertion de la courbure ( 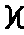 1, 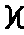 2) par formage plastique à chaud et/ou
de préférence une insertion d'une courbure ( 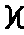 1, 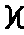 2) constante dans la direction circonférentielle (U) de la plaque (1a) ; et/ou
- la disposition (S3.3) l'une sur l'autre d'au moins deux plaques (1a) essentiellement orthogonales à la direction longitudinale (L) et à la direction circonférentielle (U) de la plaque (1a) ; et/ou
- la disposition (S3.4) de la plaque (1a) sur un moule (40).

4. Procédé de fabrication selon l'une quelconque des revendications précédentes,
- dans lequel l'épaisseur (dÜ) de l'au moins une partie de transition (Ü) varie en continu ou graduellement, et/ou
- dans lequel la courbure ( 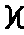 1, 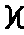 2) insérée dans la direction circonférentielle (U) varie le long de la direction longitudinale (L) de la plaque (1a).

5. Procédé de fabrication selon l'une quelconque des revendications précédentes, avec l'étape de :
- production (S4) d'au moins une surface de jonction sur la plaque (1a) pour relier au moins une autre plaque (1a), dans lequel la production de l'au moins une surface de jonction comprend :
la production (S4.2) d'au moins une surface de jonction circonférentielle (2a, 2b) pour relier au moins une autre plaque (1a) dans la direction longitudinale (L).

6. Procédé de fabrication pour la réalisation d'une partie de tour (10), avec l'étape de :
- liaison (S5) de deux plaques (1a) produites selon un procédé de fabrication selon l'une quelconque des revendications précédentes sur les surfaces de jonction longitudinales (3a, 3b) correspondantes, dans lequel la liaison (S5) comprend :
la disposition et la fixation (S5.1) de plaques (1a) adjacentes les unes aux autres le long des surfaces de jonction longitudinales (3a, 3b) en une partie de tour (10) annulaire dans la direction circonférentielle (U) ; et
la réalisation (S5.2) d'une soudure longitudinale entre les plaques (1a) adjacentes le long des surfaces de jonction longitudinales (3a, 3b).

7. Procédé de fabrication pour la réalisation d'une section de tour (20), avec l'étape de :
- liaison (S6) de deux parties de tour (10) ou plus produites selon un procédé de fabrication selon la revendication précédente sur les surfaces de jonction circonférentielles (2a, 2b) correspondantes, dans lequel la liaison (S6) comprend :
la disposition et la fixation (S6.1) des parties de tour (10) adjacentes les unes aux autres le long des surfaces de jonction circonférentielles (2a, 2b) en une section de tour (20) dans la direction longitudinale (L) ; et
la réalisation (S6.2) d'une soudure circonférentielle entre les parties de tour (10) adjacentes le long des surfaces de jonction circonférentielles (2a, 2b).

8. Procédé de fabrication selon l'une quelconque des revendications 6 à 7 précédentes, avec l'étape de :
- meulage (S7.1) de la soudure circonférentielle et/ou meulage (S7.2) de la soudure longitudinale, et/ou
- recuit (S8.1) des plaques dans la zone de la soudure circonférentielle et/ou recuit (S8.2) de la soudure longitudinale.

9. Segment de tour (1) d'une tour (102) s'amincissant, en particulier d'une tour (102) s'amincissant d'une éolienne (100), comprenant une plaque (1a), dans lequel la plaque (1a) s'étend dans une direction longitudinale (L) et orthogonalement à celle-ci dans une direction circonférentielle (U), dans lequel l'extension dans la direction longitudinale (L) est supérieure à l'extension dans la direction circonférentielle (U), et dans lequel la plaque (1a) présente un profil d'épaisseur avec une épaisseur variable le long de la direction longitudinale (L) de la plaque (1a), avec
- au moins une partie de transition (Ü)avec une épaisseur variable (dÜ) ; et/ou
- au moins une partie constante (K1, K2, K3, K4, K5) avec une épaisseur essentiellement constante (d1, d2, d3, d4, d5),
**caractérisé en ce que**
la courbure ( 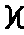 1, 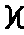 2) insérée dans la direction circonférentielle le long de la direction longitudinale (L) de la plaque (1a) à l'état monté varie pour régler ou obtenir une inclinaison requise de la tour.

10. Partie de tour (10) d'une tour (102), en particulier d'une tour (102) d'une éolienne (100), comprenant deux, trois ou plus segments de tour (1) selon la revendication 9 , dans laquelle
- les segments de tour (1) sont disposés de manière annulaire dans la direction circonférentielle (U) ou en tant que sous-partie annulaire et les segments de tour (1) adjacents sont fixés les uns aux autres sur les surfaces de jonction longitudinales (3a, 3b).

11. Partie de tour (10) selon la revendication précédente, dans laquelle, à l'état monté, l'épaisseur de la partie de tour est différente dans la direction circonférentielle (U), en particulier entre au moins deux segments de tour (1).

12. Section de tour (20) d'une tour (102), en particulier d'une tour (102) d'une éolienne (100), comprenant deux, trois ou plus parties de tour (10) selon l'une quelconque des revendications précédentes 10-11, dans laquelle les parties de tour (10) sont disposées les unes sur les autres à l'état monté dans la direction longitudinale (L) et les parties de tour (10) adjacentes sont fixées les unes aux autres sur les surfaces de jonction circonférentielles (2a, 2b).

13. Section de tour (20) selon la revendication précédente, dans laquelle la section de tour (20)
- présente, sur une extrémité supérieure dans la direction longitudinale (L) à l'état monté, une bride annulaire supérieure (22) pour la fixation d'une autre section de tour ou nacelle (104), et/ou
- présente, sur une extrémité inférieure dans la direction longitudinale (L) à l'état monté, une bride annulaire inférieure (21) pour la fixation d'une autre section de tour (20) ou d'une base.

14. Tour (102) comprenant une section de tour (20) selon l'une quelconque des revendications 12-13 précédentes.

15. Éolienne (100) comprenant une tour (102) selon la revendication précédente.

16. Utilisation d'un segment de tour selon la revendication 9 et/ou d'une partie de tour selon l'une quelconque des revendications précédentes 10-11 et/ou d'une section de tour selon l'une quelconque des revendications précédentes 12-13 pour une tour, en particulier pour une tour pour une éolienne.
